# EUROPÄISCHE PATENTSCHRIFT

(11) **EP 3 450 914 B1**
(45) Veröffentlichungstag und Bekanntmachung des Hinweises auf die Patenterteilung: **08.04.2020**
(21) Anmeldenummer: 18187812.5
(22) Anmeldetag: 07.08.2018
(51) Int. Cl.: G01C 3/04, G01C 21/20, G01S 17/02

(54) **VERFAHREN ZUR ANNÄHERUNG AN EIN ZIEL**
METHOD FOR APPROACHING A TARGET
PROCÉDÉ D'APPROCHE D'UNE CIBLE

(30) Priorität: 31.08.2017 AT 507312017
(43) Veröffentlichungstag der Anmeldung: 06.03.2019
(73) Patentinhaber: Swarovski-Optik KG., 6067 Absam (AT)
(72) Erfinder: SCHREITER, Gerd, 6113 Wattenberg (AT); SCHWARZ, Wolfgang, 6069 Gnadenwald (AT)
(74) Vertreter: Burger, Hannes

(56) Entgegenhaltungen:
- EP-A2- 2 629 134
- DE-A1-102009 059 820
- US-A1- 2011 288 818
- US-A1- 2013 046 461

## Beschreibung

Die Erfindung betrifft ein Ziel-Annäherungsverfahren mit einem fernoptischen Gerät.

Fernoptische Geräte, insbesondere für den Jagdeinsatz, sind hinsichtlich ihrer, auf das Ziel gerichteten Abbildungseigenschaften optimiert, insbesondere im Hinblick auf die bei der Jagd anzutreffenden Entfernungen. Dies ist dann von Bedeutung, wenn es sich beim fernoptischen Gerät um ein Zielfernrohr eines Jagdgewehres handelt. Das fernoptische Gerät kann aber auch ein Fernglas oder Teleskop (generell auch Fernrohr mit einer Beobachtungsoptik) sein, um damit ein entferntes Ziel anzuvisieren. Moderne Zielfernrohre bzw. Ferngläser, insbesondere moderne fernoptische Geräte, weisen zumeist auch eine Entfernungsmessvorrichtung auf. Bevorzugt ist diese Entfernungsmessvorrichtung derart am fernoptischen Gerät angeordnet, dass die Messrichtung bzw. der Messstrahl, exakt mit der Blickrichtung übereinstimmt, insbesondere mit der optischen Achse des fernoptischen Geräts. Somit ist gewährleistet, dass beim Anvisieren eines Ziels durch das fernoptische Gerät, auch die Messachse zur Bestimmung der Entfernung zwischen optischem Gerät und Ziel, genau mit der Blickrichtung übereinstimmt und somit keine Zielfehler und Falschmessungen auftreten.

Moderne fernoptische Geräte weisen ferner auch eine Ausrichtungsermittlungsvorrichtung auf, um die Blickrichtung im Raum, insbesondere in Relation zu den Himmelsrichtungen und zur Horizontalebene, festlegen bzw. angeben zu können.

Wird ein Ziel (Point-of-Interest - POI) anvisiert und möchte der Träger des fernoptischen Geräts zur Zielposition gelangen, ist beispielsweise aus der US 9,068,800 B2 und auch der US 9,335,121 B2 bekannt, die aktuelle Position des fernoptischen Geräts zu ermitteln. Anhand der ermittelten Entfernungs- und Richtungsinformation wird eine digitale Karte aktualisiert, und die Karte bei der Bewegung des Trägers des fernoptischen Gerätes laufend aktuell gehalten. Die Ermittlung der aktuellen Position des Trägers bzw. des fernoptischen Gerätes erfolgt mittels eines satellitengestützten globalen Positionierungssystems (GPS).

Auch aus der DE 201 11 501 U1 ist eine GPS gestützte Positionsbestimmungsvorrichtung bekannt, welche auf Basis der ermittelten Position, und einer Entfernung und Richtung zum Ziel, eine Anzeige, insbesondere eine Kartenanzeige, aktualisiert.

Eine weitere ähnliche Ausführung einer derartigen Vorrichtung zeigen die US 2012/0109577 A1, die US 5,825,480 A sowie die US 8,314,923 B2.

Das Dokument EP 2 629 134 A2 beschreibt ein optisches Beobachtungsgerät und ein Verfahren zur Zielerfassung und Zielführung bei dem die Ortskoordinaten eines Zielpunkts unter Verwendung eines Laserentfernungsmessers, eines elektronischen Kompass und eines GPS-Moduls bestimmt werden. Zu Beginn des Verfahrens wird der gewünschte Zielpunkt mit dem Beobachtungsgerät anvisiert und wird dabei mit dem Laserentfernungsmesser seine Entfernung und mit dem Kompass die Richtung des Zielpunkts relativ zum Standort des Benutzers bestimmt. Auf einem Display das an dem Beobachtungsgerät angeordnet ist, wird dem Benutzer die Entfernung und die Richtung zu dem Zielpunkt angezeigt. Auf seinem Weg von der ursprünglichen Startposition zu der Zielposition erfolgt eine Aktualisierung dieser Angaben auf dem Display ausschließlich durch Messung der momentanen GPS-Koordinaten der jeweiligen Zwischenpositionen auf dem Weg zu dem Zielpunkt. Die momentane Zielentfernung und die Richtungsinformation von der Zwischenposition relativ zu dem Zielpunkt erfolgt sodann nur noch unter Verwendung der GPS-Koordinaten der jeweiligen Zwischenpositionen und des Zielpunkts.

In dem Dokument US 2013/046461 A1 wird eine Vorrichtung und ein Verfahren zur Orientierung im Gelände beschrieben. Die Vorrichtung umfasst eine Kombination aus einem Beobachtungsgerät mit einem Entfernungsmesser, einem GPS-Modul, einem Kompass, einem Höhenmesser als auch einem Winkel- bzw. Neigungsmesser. Der Benutzer kann unter Verwendung des GPS-Moduls die Koordinaten der Ausgangsposition bestimmen. Beim Anvisieren des gewünschten Zielpunkts wird mit dem Entfernungsmessgerät dessen Distanz und mit dem Kompass die relative Richtung zwischen Ausgangspunkt und Zielpunkt gemessen. Die Informationen über Richtung und Entfernung zu dem gewünschten Zielpunkt werden dem Benutzer in dem Sehfeld des Beobachtungsgeräts durch einen eingeblendeten Zielvektor angezeigt. Beim Fortschreiten des Benutzers auf dem Weg zu der Zielposition werden die momentanen GPS-Koordinaten auf den eingenommenen Zwischenpositionen herangezogen, um die relative Richtungs- und Entfernungsinformation zu aktualisieren.

Das Dokument DE 10 2009 059 820 A1 beschreibt eine Orientierungshilfe für Blinde durch den Tastsinn. Eine Umgebung bzw. der Raum in dem sich ein Blinder aufhält, wird mit Hilfe eines Laserscanners bzw. einer Kamera der Vorrichtung, die von dem Blinden mitgeführt wird, aufgenommen. Eine solche messtechnisch erfasste Fläche, ein sogenanntes "Aufenthaltsfeld", wird als Projektion auf einem "Tastfeld" für den Blinden in tastbarer Form wiedergegeben. Diese Darstellung auf dem Tastfeld erfolgt durch ein verformbares Relief oder mittels aus einer Fläche herausragender Stifte, die elektromechanisch oder piezoelektrisch angehoben und versenkt werden können. Dadurch können dem Blinden in dem Aufenthaltsfeld vorhandene Objekte aber auch die eigene Position in dem Aufenthaltsfeld maßstabgerecht angezeigt werden.

Das Dokument US 2011/288818 beschreibt eine Vorrichtung zum kontaktlosen Vermessen von dreidimensionalen Objekten. Dabei wird ein Laser-Lichtstrahl auf zu vermessende Punkte an dem Objekt gerichtet, wobei deren Entfernung und Lage im Raum detektiert wird. Auf Grundlage dieser Daten werden Abstände und Winkel zwischen den Punkten berechnet.

Das Problem das sich bei den Dokumenten zum Stand der Technik ergibt, liegt darin, dass diese Systeme auf ein globales Positionsbestimmungssystem angewiesen sind, insbesondere ist dies ein satellitengestütztes Positionsbestimmungssystem. Bei der Bewegung im Gelände kann es nun aufgrund örtlicher Gegebenheiten oftmals vorkommen, dass eine freie Sicht nach oben eingeschränkt ist und somit zu wenig Satelliten für eine zuverlässig genaue Positionsbestimmung erreichbar sind. Auch kann es vorkommen, dass die Signalqualität nicht ausreichend und die Standortgenauigkeit dementsprechend ungenau ist. Obwohl sich die Satelliten kontinuierlich bewegen, ist es für einen Benutzer eines fernoptischen Gerätes nicht praktikabel, auf das Auftauchen einer ausreichenden Anzahl an Satelliten zu warten, um eine ausreichend genaue Positionsbestimmung durchführen zu können. Da ferner in vielen Fällen die absolute Position des Trägers des fernoptischen Geräts und auch die absolute Position des Ziels von geringer bzw. keiner Bedeutung sind, ist eine absolute Positionsbestimmung zumeist nicht erforderlich.

Ferner wird bei den aus dem Stand der Technik bekannten Systemen mittels des globalen Positionsbestimmungssystems, laufend bzw. zyklisch die Position des Trägers bzw. genauer, des fernoptischen Gerätes, ermittelt und die Kartendarstellung aktualisiert. Dies bedeutet einen unnötigen gerätetechnischen Aufwand und ist insbesondere aufgrund des damit verbundenen, erhöhten Energieverbrauchs hinsichtlich eines möglichst langen autarken Betriebs von Nachteil. Ferner ist von Nachteil, dass Positionsbestimmungssysteme, insbesondere Satellitengestützte Systeme, eine freie Sichtverbindung zum Himmel benötigen, um die Positionsortung durchführen zu können. Dies ist jedoch im Gelände oftmals nicht gegeben, sodass die Positionsbestimmung dann nur sehr ungenau oder gar nicht durchgeführt werden kann. Bei der Jagd und/oder bei Beobachtungsaktivitäten kann es vorkommen, dass der Jäger/Beobachter eine geschützte bzw. gedeckte Position einnehmen muss und somit die erforderliche Sichtverbindung nach oben fehlt bzw. eingeschränkt ist. Nach Verlassen der Position müsste der Beobachter dann warten, bis eine stabile Positionsbestimmung erreicht wurde, was u.U. einiges an Zeit benötigt. Oder, was deutlich ungünstiger wäre, der Beobachter müsste mit einer ungenau bestimmten Position starten, oder sich in einen Bereich begeben, wo eine ausreichende Sichtverbindung nach oben besteht. Im praktischen Einsatz hat dies jedoch entscheidende Nachteile, da in jedem Fall Zeit für die Annäherung an das Ziel verloren geht.

Die Aufgabe der Erfindung liegt nun darin, für ein modernes fernoptisches Gerät ein Verfahren zu finden, welches bestehende Systeme eines fernoptischen Geräts verwendet bzw. benutzt, insbesondere ein System zur Ermittlung der Entfernung zu einem Ziel und einer Ausrichtung des fernoptischen Gerätes. Basierend auf einer ermittelten Entfernungsinformation und einer ermittelten Ausrichtung, soll eine aus dem Stand der Technik bekannte Abhängigkeit von zusätzlichen Systemen bzw. Diensten vermieden werden. Die Aufgabe der Erfindung besteht insbesondere somit darin, lediglich mit bestehenden Informationen einen sofortigen Start der Annäherung an ein Ziel zu ermöglichen.

Als Ziel ist in diesem Zusammenhang nicht nur ein Ziel im jagdlichen Sinn (Tier) zu verstehen, sondern jede von einem Beobachter mit einem fernoptischen Gerät beobachtbare Szene oder Objekt von besonderem Interesse (,point of interest' - POI), wie beispielsweise markante Landschaftsstellen oder geologischen Formationen, Sehenswürdigkeiten, Gebäude oder Personen.

Diese Aufgabe wird durch ein Verfahren gemäß den Ansprüchen gelöst.

Das erfindungsgemäße Verfahren betrifft ein Ziel-Annäherungsverfahren mit einem fernoptischen Gerät, welches fernoptische Gerät eine Beobachtungsoptik, eine Entfernungsmessvorrichtung und eine Ausrichtungsermittlungsvorrichtung aufweist, wobei sich ein Träger des fernoptischen Geräts auf einem Weg, der sich von einer Startposition zu einer Zielposition erstreckt, zu einer Zwischenposition bewegt. Das Verfahren umfasst einen Adaptierungsschritt, in welchem an einer Zwischenposition mit der Beobachtungsoptik des fernoptischen Geräts eine Referenzposition anvisiert wird, wobei eine Referenzentfernung und ein Referenzwinkel der Referenzposition relativ zum Ziel an einer Zielposition in einem geodätischen Rechenmodul hinterlegt sind und mittels der Ausrichtungsermittlungsvorrichtung ein Differenzwinkel zwischen einer Absolutrichtung und einer Bezugsrichtung des fernoptischen Geräts ermittelt wird. Mittels der Entfernungsmessvorrichtung wird eine Differenzentfernung von der Zwischenposition zur Referenzposition ermittelt, und von einem geodätischen Rechenmodul, aus der Referenzentfernung und der Differenzentfernung, sowie aus dem Referenzwinkel und dem Differenzwinkel eine Zielentfernung und ein Zielwinkel der Zwischenposition relativ zu der Zielposition ermittelt werden.

Der besondere Vorteil dieses Verfahrens liegt darin, dass von jeder Zwischenposition, entlang des Wegs von einer Startposition zum Ziel an der Zielposition, die Annäherung an das Ziel beginnen bzw. neu beginnen kann. Insbesondere ist anspruchsgemäß vorgesehen, dass von einer Referenzposition, welche von der Zwischenposition aus anvisierbar ist, eine Referenzentfernung und ein Referenzwinkel zum Ziel bekannt sind. Vorteilhaft wäre, wenn bei einer Annäherung an das Ziel, ein Ausgangspunkt, bspw. die Startposition den gesamten Weg sichtbar und somit anvisierbar wäre. Entlang des Wegs zum Ziel kann sich aufgrund örtlicher Gegebenheiten die Situation ergeben, dass dieser Ausgangspunkt nicht mehr sichtbar bzw. anvisierbar ist. Durch die erfindungsgemäße Ausführung ist auch in solch einem Fall gewährleistet, dass eine Annäherung auf das Ziel jederzeit zuverlässig möglich ist, indem eine Referenzposition als neuer Bezugspunkt für eine Bestimmung der Bewegungsrichtung zum Ziel herangezogen werden kann. Diese Referenzposition kann bspw. durch eine weithin sichtbare Landschaftsmarke, oder durch ein bauliches Merkmal gebildet sein.

Ein weiterer Vorteil dieses Verfahrens liegt auch darin, dass mittels Vorrichtungen, insbesondere einer Entfernungsmessvorrichtung und einer Ausrichtungsermittlungsvorrichtung, welche auf modernen fernoptischen Geräten vorhanden sind, eine Zielannäherung möglich ist, ohne dass dafür zusätzliche Navigationssysteme erforderlich sind. Solche zusätzlichen Systeme führen zu einem zusätzlichen gerätetechnischen Aufwand, und funktionieren ggf. bei der Bewegung im Feld nicht zuverlässig, weil bspw. die erforderliche freie Sicht nach oben durch räumliche Einschränkungen nicht gegeben ist.

Nach einer Weiterbildung ist vorgesehen, dass das Verfahren einen Referenzierungsschritt aufweist. In diesem Referenzierungsschritt wird mittels der Beobachtungsoptik von einer Position aus, eine zweite Position anvisiert, wobei von einer der Positionen die Entfernung und der Winkel zum Ziel an der Zielposition bekannt sind. Mittels der Entfernungsmessvorrichtung wird eine Differenzentfernung zwischen den zwei Positionen, und mittels der Ausrichtungsermittlungsvorrichtung ein erster Winkel zwischen einer Absolutrichtung und einer Bezugsrichtung des fernoptischen Geräts ermittelt. Vom geodätischen Rechenmodul wird aus der Differenzentfernung und dem ersten Winkel, sowie aus der bekannten Entfernung und Winkel zum Ziel an der Zielposition von der einen Position aus, die Entfernung und der Winkel zum Ziel an der Zielposition der anderen Position ermittelt. Diese ermittelte Entfernung und dieser Winkel werden als Referenzentfernung und Referenzwinkel der vorher unbestimmten Position gesetzt, sodass diese Position somit zu einer Referenzposition wird. Insbesondere wird zumindest eine Startposition durch Messung zur Zielposition als Referenzposition nach diesen Schritten bestimmt. Mit dieser Weiterbildung wird es einem Benutzer ermöglicht, eine beliebige Position, als Referenzposition festlegen zu können, bzw. eine dadurch eingemessene Position als neue Referenzposition festzulegen. Insbesondere wird somit die Startposition als Referenzposition bestimmt.

Nach einer Weiterbildung ist vorgesehen, dass das fernoptische Gerät ferner eine Neigungsmessvorrichtung aufweist, wobei im Adaptierungsschritt, beim Anvisieren der Referenzposition von der Zwischenposition ausgehend, ein Differenzhöhenwinkel ermittelt wird, und vom geodätischen Rechenmodul aus einem Referenzhöhenwinkel und dem Differenzhöhenwinkel ein Zielhöhenwinkel ermittelt wird, und dieser bei der Berechnung der Zielentfernung und des Zielwinkels mit berücksichtigt wird. Wenn der Höhenunterschied zwischen der Start- und der Zielposition gering und das Gelände zwischen Start- und Zielposition weitestgehend eben ist, würde ein Nichtberücksichtigen des Zielhöhenwinkels einen vernachlässigbaren Fehler verursachen. Bei einem großen Höhenunterschied und/oder einem hügeligen Gelände führt die gegenständliche Berücksichtigung des Höhenwinkels bzw. des Differenzhöhenwinkels zu einer deutlichen Verbesserung der Annäherungsgenauigkeit.

Diesbezüglich ist nach einer Weiterbildung auch vorgesehen, dass das fernoptische Gerät ferner eine Neigungsmessvorrichtung aufweist, wobei beim Anvisieren einer Position im Referenzierungsschritt, ein Differenzhöhenwinkel ermittelt wird, und vom geodätischen Rechenmodul aus dem Differenzhöhenwinkel und einem bekannten Höhenwinkel einer Position, ein Referenzzielhöhenwinkel ermittelt wird. Die Vorteile der Berücksichtigung eines Höhenunterschieds wurden bereits zuvor beschrieben.

Eine Weiterbildung besteht auch darin, dass die ermittelte Zielentfernung, der ermittelte Zielwinkel und/oder der ermittelte Zielhöhenwinkel, auf einem Anzeigemittel dargestellt werden, wobei zur Darstellung sowohl Ziffern als auch grafische Indikatoren zur Veranschaulichung der Zahlenwerte dienen können. Von Vorteil ist diesbezüglich ferner, wenn das Anzeigemittel im oder am fernoptischen Gerät angeordnet ist, bevorzugt in der Beobachtungsoptik. Diese Weiterbildung hat den besonderen Vorteil, dass die ermittelte Richtung zum Ziel direkt im Sehbereich des Benutzers dargestellt bzw. angezeigt wird. Insbesondere vorteilhaft ist, wenn das Anzeigemittel in der Beobachtungsoptik angeordnet ist, denn dann bekommt der Benutzer die Information direkt beim Betrachten der anvisierten Position eingeblendet und braucht das fernoptische Gerät somit nicht von den Augen absetzen.

Eine vorteilhafte Weiterbildung besteht darin, dass der Adaptierungsschritt an einer von der vorherigen Zwischenposition räumlich distanzierten weiteren Zwischenposition erneut durchgeführt wird, in dem die Zwischenposition gleich der Startposition, die ermittelte Zielentfernung zur ersten Entfernung und der Zielwinkel zum ersten Winkel festgelegt wird, und dass gegebenenfalls der Differenzhöhenwinkel zum ersten Höhenwinkel festgelegt wird. Dies entspricht einem iterativen Prozess, bei dem eine stückweise Annährung an das Ziel erfolgt. Gerade bei einer Bewegung in unwegsamem Gelände ist ein direkter Weg zum Ziel teilweise nicht möglich, sondern ist das Ziel nur über eine oder mehrere Zwischenpositionen erreichbar. Mit der gegenständlichen Weiterbildung kann entlang des Pfads, somit stets die korrekte Richtung und Entfernung zum Ziel ermittelt, und dem Benutzer des fernoptischen Geräts dargestellt werden.

Nach einer Weiterbildung ist ferner vorgesehen, dass der Adaptierungsschritt an einer von der vorherigen Zwischenposition räumlich distanzierten weiteren Zwischenposition erneut durchgeführt wird. Ergibt sich am Weg zur Zielposition die Situation, dass ein Anvisieren der Startposition nicht mehr möglich ist, kann gemäß dieser Weiterbildung auch noch am Weg von der Startposition als ursprüngliche Ausgangsreferenz, auf einen expliziten Referenzpunkt als Ausgangsreferenz gewechselt werden. Es ist auch möglich, dass sich am Weg die Situation ergibt, dass die Startposition wieder anvisierbar ist. Mit dieser Weiterbildung ist es auch möglich, von einer expliziten Referenzposition zurück auf die Startposition als Ausgangsreferenz zu wechseln.

Von Vorteil ist auch eine Weiterbildung, nach der die Ausrichtungsermittlungsvorrichtung durch einen Kompass gebildet ist, und als Absolutrichtung die Nord-Richtung festgelegt wird.

Ein Kompass, insbesondere ein elektronischer Kompass, ist mittlerweile sehr kompakt ausgebildet, ausreichend genau und kostengünstig, so dass ein solcher Kompass sehr einfach in ein fernoptisches Gerät integriert werden kann. Die Verwendung eines Kompasses mit der Nord-Richtung als Absolutrichtung hat den weiteren Vorteil, dass eine solche Vorrichtung stets, und insbesondere ohne regelmäßigen Abgleich, eine global gültige Absolutausrichtung als Bezugsausrichtung zur Verfügung stellt. Da nach dem gegenständlichen Verfahren zur Zielführung eine relative und keine Absolutausrichtung mehr notwendig ist, sind die Anforderungen an die Ausrichtungsermittlungsvorrichtung bezüglich absoluter Messgenauigkeit nicht allzu hoch, wichtig ist eine gute Wiederholgenauigkeit.

Bewegt sich das fernoptische Gerät während der Annäherung an das Ziel, wird es aufgrund örtlicher Gegebenheiten vorkommen, dass die aktuelle Bewegungsrichtung von der an der Start- bzw. Zwischenposition ermittelten Zielrichtung abweichen. Nach einer Weiterbildung ist daher vorgesehen, dass von der Ausrichtungsermittlungsvorrichtung die Absolutrichtung kontinuierlich bzw. zyklisch ermittelt wird, und am Anzeigemittel dargestellt wird. Somit erhält der Träger des fernoptischen Geräts stets eine aktuelle Darstellung der Absolutrichtung und kann mit grundlegenden Orientierungskenntnissen die Richtung zum Ziel abschätzen.

Eine Weiterbildung besteht auch darin, dass die Entfernungsmessvorrichtung ein Leuchtmittel zur gerichteten Abgabe von gepulstem Licht aufweist, insbesondere einen Laser oder eine LED. Mittels der Entfernungsmessvorrichtung wird in einem ersten Fall als erste Richtungsinformation die Zielentfernung und der Zielwinkel, und gegebenenfalls der Zielhöhenwinkel, oder in einem zweiten Fall als zweite Richtungsinformation die erste Entfernung und der erste Winkel, und gegebenenfalls der erste Höhenwinkel, an eine Gegenstelle optisch über eine Modulation des Lichtes der Entfernungsmessvorrichtung übertragen. Ebenfalls übermittelt bzw. bei der Übermittlung automatisch bestimmt werden die relative Entfernung und der relative Winkel zwischen dem Sender und Empfänger. Dies ermöglicht es, anhand von Entfernung und Winkel den relativen Standort vom Empfänger zum Sender mittels des geodätischen/trigonometrischen Rechenmoduls zu bestimmen. Der Relativstandort des Empfängers ist wichtig, um aus den übermittelten Daten den relativen Standort des Ziels in Bezug auf den Empfänger zu bestimmen. Dabei befinden sich das fernoptische Gerät an der Zwischenposition (Fall I) oder der Startposition (Fall II), und die Gegenstation an einer, davon räumlich entfernten Übergabeposition. Diese vorteilhafte Weiterbildung ermöglicht es, die Zielposition bzw. die adaptierte Richtung zum Ziel/POI an eine oder mehrere Gegenstellen zu übermitteln, insbesondere an ein anderes fernoptisches Gerät welches das gegenständliche Verfahren unterstützt. Bei der Bewegung im Gelände kann es vorkommen, dass sich eine zweite Person als Träger der Gegenstelle in einer räumlich günstigeren und/oder näher dem Ziel gelegenen Position befindet. Mit dieser Weiterbildung kann die Zielangabe an diese zweite Person übermittelt werden, so dass diese Person anschließend die Zielannäherung durchführen bzw. fortsetzen kann. Im Gelände kann sich aufgrund der Entfernung bzw. aufgrund eines Gebots der Stille, bspw. in einer jagdlichen Pirsch, eine Kommunikation zwischen den Personen und insbesondere die Übermittlung der Zielposition schwierig gestalten. Mit dieser Weiterbildung wird in vorteilhafter Weise erreicht, dass zuverlässig und unter Ausschluss von Kommunikationsfehlern, die Zielposition bzw. die Richtung zum Ziel übertragen werden kann. Im Weiteren wird unter erster Person bzw. erstes fernoptische Gerät, jene Person bzw. jenes Gerät verstanden, die/dass das Ziel anvisiert hat und die Richtungsinformation zum Ziel an die zweite Person, das zweite Gerät bzw. die Gegenstelle übergibt. Selbstverständlich erfolgt die Übergabe zwischen dem fernoptischen Gerät und der Gegenstelle optisch mittels der Entfernungsmessvorrichtung.

Sollte sich der/die Empfänger in unmittelbarer Umgebung/Nähe zum Sender befinden, kann die Ermittlung der relativen Position zwischen Sender-Empfänger entfallen und mit der Senderposition weiter gearbeitet werden. Das bedeutet, es müssen somit nur die Entfernung und der Winkel des Senders zum Ziel übertragen werden. In diesem Fall ist es auch möglich bzw. vorgesehen, dass die Zielposition mittels einer drahtlosen Kommunikation zwischen den verschiedenen Geräten wie zB. Bluethooth oder WLAN übertragen wird. Dies ist unter anderem von Vorteil, wenn zum Beispiel einer Gruppe oder auch nur einem einzelnen Beobachter von einem sich in der Nähe befindlichen anderen Beobachter (Guide) die Zielposition eines besonderen Zieles weitergeleitet wird und es den Beobachtern somit erleichtert wird, dasselbe Ziel leichter aufzufinden.

Bei der Übermittlung der Zielposition bzw. der Richtung zum Ziel an eine zweite Person an einer Übergabeposition, ergibt sich durch den Standortwechsel die Notwendigkeit, die Richtung und Entfernung zum Ziel neu zu berechnen. Daher ist nach einer Weiterbildung vorgesehen, dass von der Gegenstelle im ersten Fall (unter Bezugnahme auf die vorherige Erklärung und Begriffsdefinition) für die übermittelte erste Richtungsinformation, die Zielentfernung als Referenzentfernung und der Zielwinkel als Referenzwinkel festgelegt wird, und gegebenenfalls ferner der Zielhöhenwinkel als Referenzhöhenwinkel festgelegt wird. Dann wird der Adaptierungsschritt erneut durchgeführt, wobei als Startposition die aktuelle Zwischenposition des fernoptischen Geräts festgelegt wird. Diese Variante entspricht dem Fall, dass von der ersten Person die Zielerfassung und zumindest ein Adaptierungsschritt durchgeführt wurden. Beispielsweise kann sich am Annäherungsweg ergeben, dass sich eine zweite Person an einer günstigeren Position befindet, und dieser die Zielposition übergeben wird. Im zweiten Fall wird von der Gegenstelle für die übermittelte zweite Richtungsinformation, der Adaptierungsschritt durchgeführt, oder erneut durchgeführt. Hierunter ist zu verstehen, dass von der ersten Person lediglich der Zielpositions-Bestimmungsschritt durchgeführt wird, und dann die ermittelte Zielposition an die zweite Person übertragen wird.

Eine Weiterbildung besteht auch darin, dass das Anzeigemittel durch ein mobiles Datenendgerät gebildet ist und wobei zwischen dem fernoptischen Gerät und dem mobilen Datenendgerät eine drahtlose Kommunikationsverbindung besteht, über welche die ermittelte Zielentfernung und der ermittelte Zielwinkel, und gegebenenfalls der Zielhöhenwinkel, übertragen werden. Ein mobiles Datenendgerät kann bspw. durch ein Smartphone, Tablet, Smart-Watch oder dergleichen gebildet sein. Von Vorteil dieser Ausbildung ist, dass solche mobilen Datenendgeräte eine gute technische Ausstattung aufweisen und insbesondere zumindest ein Anzeigemittel und zumeist eine Mehrzahl unterschiedlicher Kommunikationsschnittstellen aufweisen. Des Weiteren sind solche Geräte weit verbreitet und werden zum überwiegenden Teil stets mitgeführt. Die Hochfrequenzkommunikationsverbindung kann nicht abschließend bspw. Bluetooth, ZigBee, WLAN, NFC oder ein gleichwertiges Kommunikationssystem sein.

Von Vorteil ist insbesondere eine Weiterbildung, nach der das mobilen Datenendgerät ebenfalls eine Ausrichtungsermittlungsvorrichtung aufweist, insbesondere einen elektronischen Kompass, wobei mittels der Ausrichtungsermittlungsvorrichtung des Datenendgeräts, vom Datenendgerät ein Ausricht-Winkel zwischen der Ausrichtung des Datenendgeräts und der Absolutrichtung ermittelt wird. Der übermittelte Zielwinkel wird auf den Ausricht-Winkel transformiert, und der dabei ermittelte Differenzwinkel am Anzeigemittel angezeigt. Somit kann über das Anzeigemittel den Benutzer eine visuelle Darstellung gegeben werden, in welche Richtung sich das Ziel befindet. Wird diese Ausrichtungsermittlung zyklisch durchgeführt, oder manuell ausgelöst, hat der Benutzer am Ziel-Annäherungsweg jederzeit eine aktuelle Info zur Verfügung, in welche Richtung sich das Ziel befindet.

Eine weitere mögliche Ausführung besteht ferner darin, dass das Datenendgerät einen Beschleunigungssensor aufweist, welcher eine Bewegung des Datenendgeräts erfasst und als Bewegungsvektor dem geodätischen Rechenmodul übergibt, welches kontinuierlich oder zyklisch, aus der Referenzentfernung und dem Referenzwinkel, sowie der Differenzentfernung und dem Differenzwinkel, und gegebenenfalls dem Differenzhöhenwinkel und dem ersten Höhenwinkel, die Zielentfernung und den Zielwinkel und gegebenenfalls den Zielhöhenwinkel aktualisiert. Mit dieser Weiterbildung kann die Richtung zum Ziel, insbesondere die Entfernung und der Zielwinkel, aufgrund der ermittelten Bewegungsinformation, während der Bewegung angepasst und dem Benutzer bereitgestellt werden.

Eine Weiterbildung besteht auch darin, dass das Anzeigemittel derart an der Beobachtungsoptik angeordnet ist, dass die Darstellung der Zielentfernung und des Zielwinkels in den Strahlengang der Beobachtungsoptik eingeblendet wird. Diese Weiterbildung hat den Vorteil, dass der Träger des fernoptischen Geräts keine zusätzliche Handlung setzen braucht, um die ermittelten Werte dargestellt zu bekommen. Unmittelbar nach dem Zielpositions-Bestimmungsschritt bzw. dem Adaptierungsschritt bekommet der Träger des fernoptischen Geräts die Information direkt in seinem Blickfeld dargestellt. Die Darstellung der Richtung kann zum Beispiel durch Angabe eines numerischen Wertes des Zielwinkels, durch Darstellung eines Richtungspfeiles oder durch Ausrichtmarken erfolgen.

Eine Weiterbildung besteht auch darin, dass die Zielentfernung und der Zielwinkel und gegebenenfalls der Zielhöhenwinkel als eines der Gruppe Richtungspfeil, Skalenbereich, Ausrichtvektor, Balkendarstellung, alphanumerische Darstellung am Anzeigemittel angezeigt werden. Richtungspfeile können am Rand oder mittig dargestellt werden und bspw. durch Variation der Größe und/oder Darstellungsintensität das Maß angeben, in welche Richtung und/oder wie weit das fernoptische Gerät verschwenkt werden muss, um das Ziel anzuvisieren. Ein Ausrichtvektor ermöglicht eine kombinierte Darstellung als einzelner Richtungspfeil. Die Verdrehung gegenüber einer festgelegten Richtung beschreibt, wie das fernoptische Gerät ausgerichtet werden muss. Über die Länge des Vektors lässt sich die Entfernung visualisieren

Eine Balkendarstellung kann ähnlich der Richtungspfeile funktionieren. Insbesondere können die Balken des Absehens (bspw. Absehen 8) durch Variation der Befüllung die Richtungsinformation darstellen. Ähnlich kann auch eine Balkenanzeige ausgebildet sein bzw. funktionieren. Diese Ausbildungen erlauben eine qualitative Darstellung der Zielrichtung, die für den Benutzer auf einen Blick ables- und erfassbar ist. Eine alphanumerische Darstellung erlaubt eine nahezu beliebig detaillierte Angabe der Zielinformation, allerdings erfordert dies auch eine Lese- und Verarbeitungsschritt durch den Benutzer. Details zu nicht abschließenden möglichen Darstellungsformen finden sich in den Figuren.

Eine Weiterbildung besteht auch darin, dass im geodätischen Rechenmodul zumindest eine Referenzposition hinterlegt wird. Zur Vorbereitung bzw. zur Planung einer Bewegung im Gelände können im Vorfeld markante Referenzpositionen ermittelt werden, und zumindest eine im geodätischen Rechenmodul hinterlegt werden. Dazu kann das geodätische Rechenmodul bspw. mit einem Datenverarbeitungssystem verbunden werden. Diese Weiterbildung ist von Vorteil, da sich dadurch eine Position des fernoptischen Geräts bezüglich eines absoluten Koordinatensystems ermitteln lässt. Diese absolute Position kann in anderen Navigationssystemen weiterverwendet werden, um zusätzliche Navigationsdienste realisieren zu können, bspw. eine Zielführung weitere entfernter, und mit optischen und/oder akustischen Mitteln nicht erreichbarer Personen.

Zum besseren Verständnis der Erfindung wird diese anhand der nachfolgenden Figuren näher erläutert.

Es zeigen jeweils in stark vereinfachter, schematischer Darstellung:
- Fig. 1: Den Adaptierungsschritt des gegenständlichen Ziel-Annäherungsverfahrens;
- Fig. 2: einen Zielpositions-Bestimmungsschritt und einen Adaptierungsschritt gemäß dem gegenständlichen Verfahren;
- Fig. 3: einen Zielpositions-Bestimmungsschritt mittels eines expliziten Referenzpunkts und einen Adaptierungsschritt gemäß dem gegenständlichen Verfahren;
- Fig. 4: a) und b) eine Ziel-Annäherung nach Ausführungsvarianten des gegenständlichen Verfahrens;
- Fig. 5: eine Berücksichtigung von Höhenunterschieden nach dem gegenständlichen Verfahren;
- Fig. 6: eine Übertragung der Zielposition an eine Gegenstation nach dem gegenständlichen Verfahren;
- Fig. 7: a) bis d) Beispiele möglicher Darstellungen der ermittelten Zielentfernung und des ermittelten Zielwinkels auf einem Anzeigemittel.

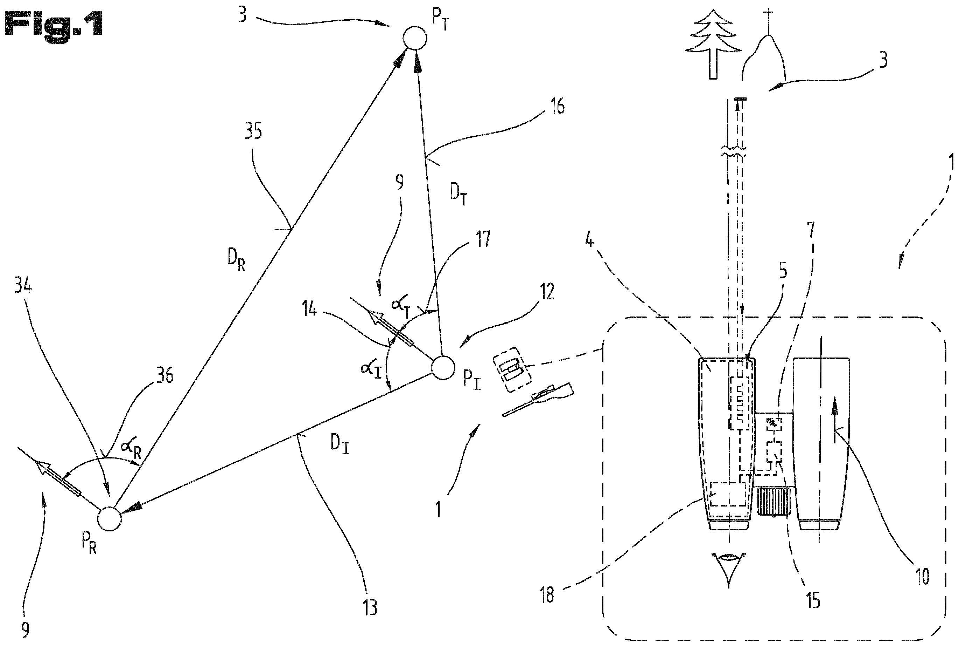

Zur Verdeutlichung der Verfahrensschritte ist in den Fig. 1 bis 3 und 5 das fernoptische Gerät in einer schematisierten Detaildarstellung gezeigt. Diese Detaildarstellung zeigt in einer möglichen Ausführungsform ein binokulares Fernglas.

Fig. 1 zeigt das gegenständliche Ziel-Annäherungsverfahren, ausgeführt mit/von einem fernoptischen Gerät 1, welches Gerät eine Beobachtungsoptik 4, eine Entfernungsmessvorrichtung 5 und eine Ausrichtungsermittlungsvorrichtung 7 umfasst. Bei der Annäherung an das Ziel an der Zielposition 3 (P_{T}) kann sich eine Situation ergeben, wo das Ziel nicht mehr sichtbar sein wird. Der Träger des fernoptischen Geräts 1 braucht daher eine Möglichkeit, die Richtung und Entfernung zum Ziel an seiner aktuellen Position bestimmen zu können, um die Annäherung an das Ziel fortsetzen zu können. An einer Zwischenposition 12 (Pi) wird daher vom Träger des fernoptischen Geräts 1 eine Referenzposition 34 (P_{R}) anvisiert, bspw. indem durch die Beobachtungsoptik 4 die Referenzposition 34 betrachtet wird und der Adaptierungsschritt ausgelöst wird. Diese Referenzposition 34 zeichnet sich dadurch aus, dass sie ortsfest ist und sich an einer Position befindet, oder aufgrund ihrer Abmessungen, entlang des Weges immer, oder den weitaus überwiegenden Teil, zu sehen und somit anvisierbar ist. Nicht abschließend kann dies beispielsweise eine weithin sichtbare Geländemarke, ein frei stehender Baum oder Sendemast sein.

Im Adaptierungsschritt wird mittels der Entfernungsmessvorrichtung 5 die Differenzentfernung 13 zwischen dem fernoptischen Gerät 1 und der Referenzposition 34 bestimmt. Ferner wird mittels der Ausrichtungsermittlungsvorrichtung 7 ein Differenzwinkel 14 zwischen einer Absolutrichtung 9 und einer Bezugsrichtung 10 des fernoptischen Geräts 1 bestimmt. Als Basis für die Festlegung der Absolutrichtung 9 ist bevorzugt das Erdmagnetfeld gewählt, da dies insbesondere im freien Gelände jederzeit und störungsfrei zur Verfügung steht. Die Ausrichtungsermittlungsvorrichtung 7 ist in diesem Fall ein Kompass, zumeist ein elektronischer Kompass.

Die Referenzposition 34 charakterisiert ein weiteres Merkmal, nämlich, dass von dieser Referenzposition 34 die Entfernung (Referenzentfernung 35) und der Winkel bezüglich der Absolutrichtung 9 (Referenzwinkel 36) zum Ziel bekannt sind. Beispielsweise können diese Werte in einem vorgelagerten Referenzierungsschritt bestimmt werden, wie dies in einer nachfolgenden Figur beschrieben wird.

Da die relative Lage (Referenzentfernung 35 und Referenzwinkel 36) von der Referenzposition zur Zielposition 3 bekannt ist, kann vom geodätischen Rechenmodul 15, aus der ermittelten Lage von der Zwischenposition 12 zur Referenzposition 34 (Differenzentfernung 13 und Differenzwinkel 14), mittels Trigonometrie, die Lage zum Ziel an der Zielposition 3 (Zielentfernung 16 und Zielwinkel 17) ermittelt werden.

Der besondere Vorteil des gegenständlichen Verfahrens liegt darin, dass ein Träger des fernoptischen Geräts 1, welches das gegenständliche Ziel-Annäherungsverfahren ausführen kann, an jeder Stelle entlang des Weges, wenn das Ziel aus den Augen verloren wurde oder nicht mehr sichtbar ist, jederzeit die Richtung und Entfernung zum Ziel neu bestimmen kann. Insbesondere ist diese Bestimmung mit hoher Genauigkeit möglich, da hier immer wieder auf einen Referenzpunkt Bezug genommen wird.

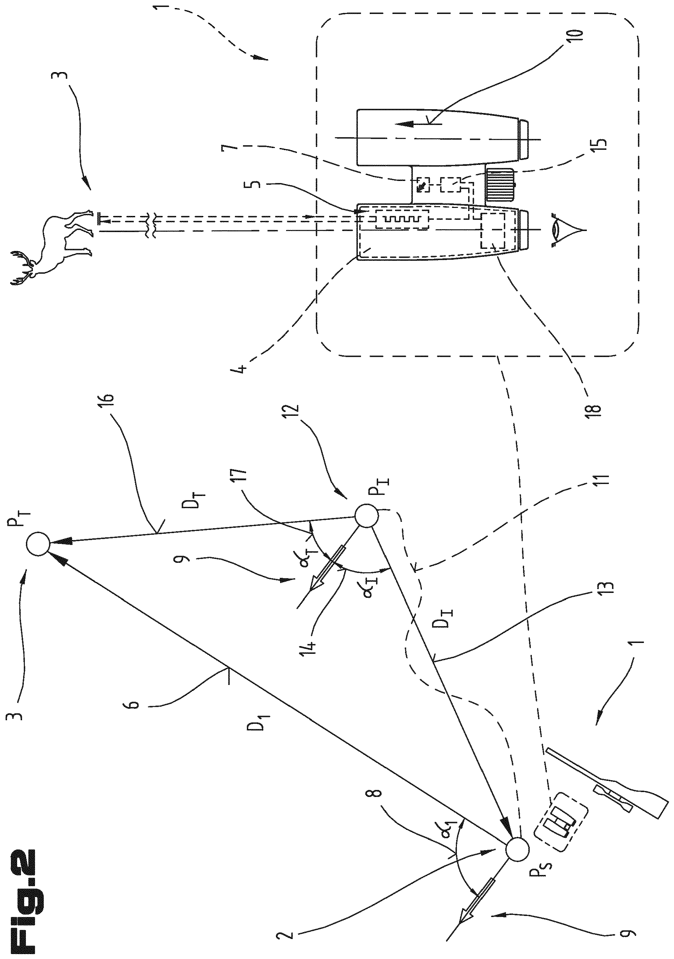

Fig. 2 zeigt eine mögliche Anwendung des gegenständlichen Ziel-Annäherungsverfahrens. Ein Träger eines fernoptischen Geräts 1 befindet sich mit dem fernoptischen Gerät an einer Startposition 2. An dieser Startposition 2 (Ps) wird mittels des fernoptischen Geräts 1 ein Ziel an einer Zielposition 3 (P_{T}) anvisiert.

In einem Zielpositions-Bestimmungsschritt an der Startposition 2, wird das Ziel an der Zielposition 3 mittels der Beobachtungsoptik 4 anvisiert. Mittels einer Entfernungsmessvorrichtung 5 wird eine erste Entfernung 6 von der Startposition 2 zur Zielposition 3 ermittelt. Diese Entfernungsmessvorrichtung 5 ist eine kontaktlose Entfernungsmessvorrichtung und ist beispielsweise durch einen Laser-Abstandsmesser gebildet.

Zusätzlich weist das fernoptische Gerät 1 eine Ausrichtungsermittlungsvorrichtung 7 auf, welche einen ersten Winkel 8 zwischen einer Absolutrichtung 9 und einer Bezugsrichtung 10 des fernoptischen Geräts 1 beim Anvisieren des Zieles ermittelt. In einer möglichen Ausführung ist die Ausrichtungsermittlungsvorrichtung 7 durch einen Kompass gebildet, bevorzugt durch einen elektronischen Kompass, sodass die Absolutrichtung 9 durch die Nordrichtung gebildet ist.

Bei der Annäherung an die Zielposition 3 bewegt sich der Träger des fernoptischen Gerätes 1 auf einem Weg 11 an eine Zwischenposition 12 (P_{I}). Aufgrund räumlicher Gegebenheiten, insbesondere aufgrund von Geländeformen, wird dieser Weg 11 zumeist nicht geradlinig verlaufen, wodurch eine Orientierung zum Ziel unter Umständen schwierig wird bzw. das Ziel aus den Augen verloren gehen kann.

Daher ist nach einer möglichen Variante des erfindungsgemäßen Verfahrens ein Adaptierungsschritt vorgesehen, bei dem an der, von der Startposition 2 räumlich entfernten Zwischenposition 12 die Startposition 2 mittels der Beobachtungsoptik 4 anvisiert wird und mittels der Entfernungsmessvorrichtung 5 eine Differenzentfernung 13 von der Zwischenposition 12 zur Startposition 2 ermittelt wird. Zusätzlich wird mittels der Ausrichtungsermittlungsvorrichtung 7 gleichzeitig ein Differenzwinkel 14 zwischen der Absolutrichtung 9 und der Bezugsrichtung 10 des fernoptischen Geräts ermittelt. Aus der ersten Entfernung 6 und dem ersten Winkel 8, sowie der Differenzentfernung 13 und dem Differenzwinkel 14 wird von einem geodätischen Rechenmodul 15 mittels trigonometrischer Berechnungsverfahren eine neue und aktuelle Zielentfernung 16 und ein Zielwinkel 17 ermittelt. Die ermittelte Zielentfernung 16 und der ermittelte Zielwinkel 17 werden dem Träger des fernoptischen Geräts 1 auf einem Anzeigemittel 18 entsprechend dargestellt. Anhand dieser Daten kann der Träger des fernoptischen Gerätes 1 seine Annäherung zum Ziel 3 anpassen und fortsetzen.

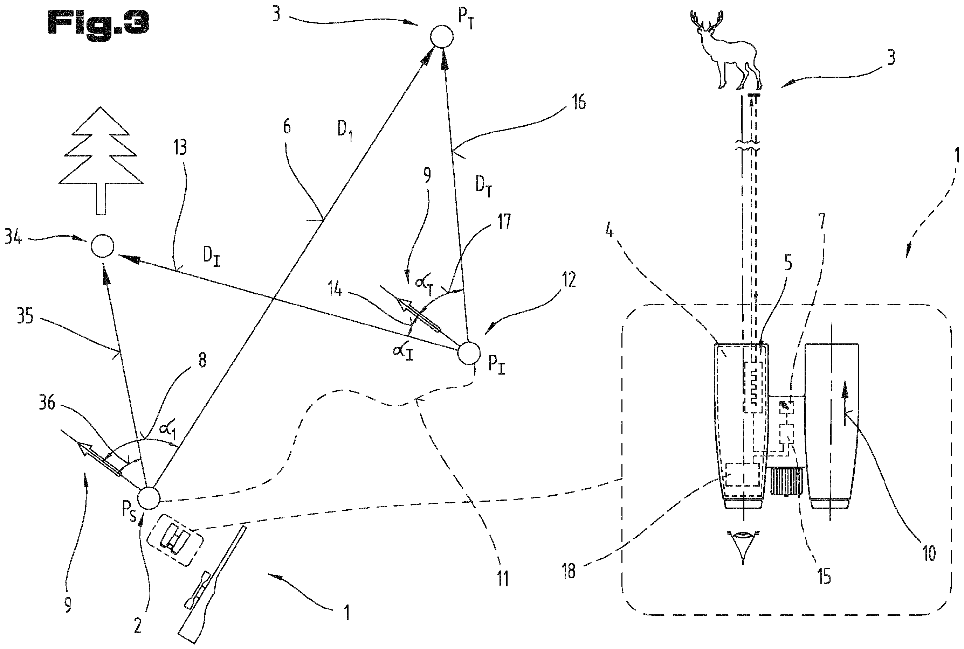

Fig. 3 zeigt eine weitere mögliche alternative Variante des gegenständlichen Ziel-Annäherungsverfahren, welches eine explizite Referenzposition 34 als Basis für die Zielnavigation verwendet. Diese Variante stellt eine Erweiterung der in Fig. 1 dargestellten Variante dar und hat, wie bereits bei Fig. 1 beschrieben den besonderen Vorteil, dass in unwegsamem, schwierigem Gelände, ein exponiertes Merkmal als Basis für die Zielnavigation verwendet wird.

Aufgrund der topologischen Gegebenheiten kann es für den Benutzer des fernoptischen Geräts erkennbar sein, dass die Startposition 2 entlang der Annäherung an die Zielposition 3 teilweise nicht anvisierbar sein wird. In diesem Fall wird im Zielpositions-Bestimmungsschritt die Referenzposition 34 mittels der Beobachtungsoptik 4 anvisiert, und mittels der Entfernungsmessvorrichtung 5 eine Referenzentfernung 35 von der Startposition 2 zur Referenzposition 34 ermittelt. Mittels der Ausrichtungsermittlungsvorrichtung 7 wird ein Referenzwinkel 36 zwischen der Absolutrichtung 9 und der Bezugsrichtung 10 des fernoptischen Geräts 1 ermittelt. Im Adaptierungsschritt wird vom geodätischen Rechenmodul 15 aus der Referenzentfernung 35 und dem Referenzwinkel 36, sowie der Differenzentfernung 13 und dem Differenzwinkel 14, die Zielentfernung 16 und der Zielwinkel 17 ermittelt.

Ergibt sich am Weg die Situation, dass die gewählte Referenzposition aus dem Sichtbereich verschwindet, kann der Referenzierungsschritt erneut ausgeführt werden, um eine neue Referenzposition festzulegen. Dabei wird die künftig zu verwendende, neue Referenzposition anvisiert, und aus der bekannten Entfernung und dem bekannten Winkel zum Ziel (dies werden zumeist die Zielentfernung und der Zielwinkel der aktuellen Position sein), und aus den ermittelten Differenzwerten (dies werden zumeist die Differenzentfernung und der Differenzwinkel sein), eine neue Referenzentfernung und ein neuer Referenzwinkel ermittelt. Somit ist auch über lange Strecken eine zuverlässige Navigation zu einem Ziel möglich.

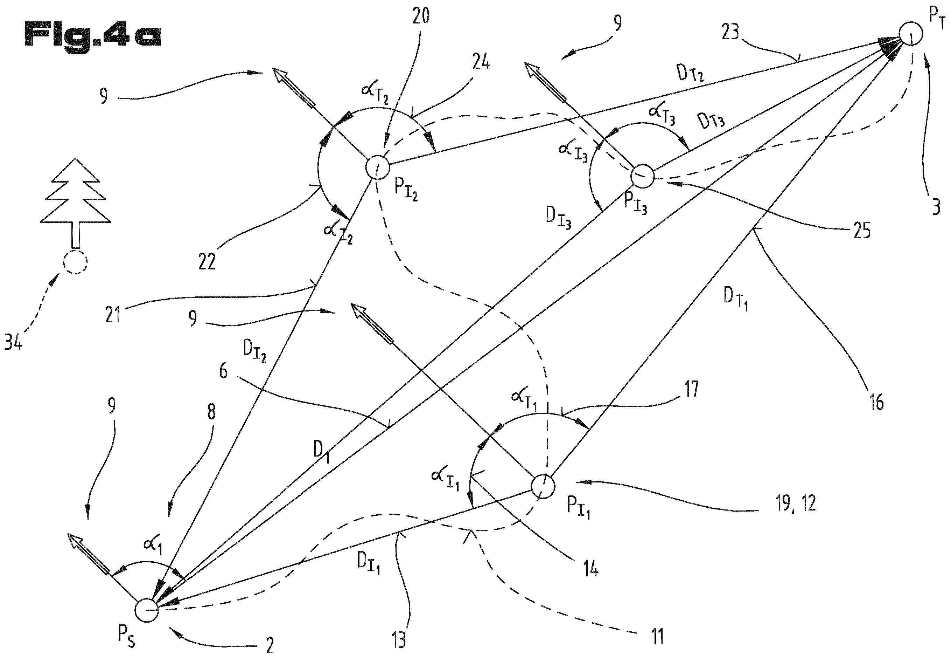

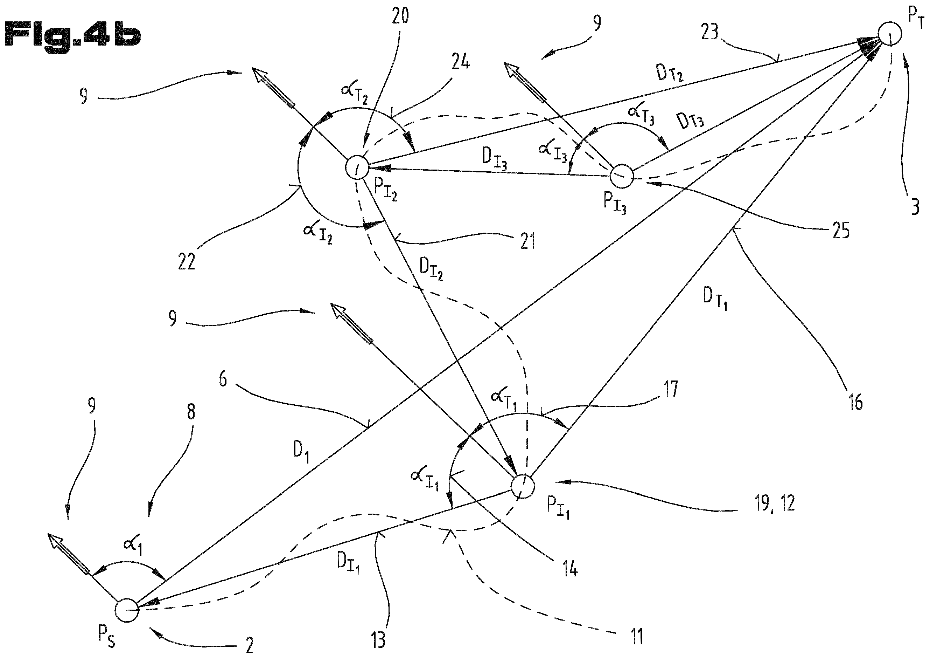

Die Fig. 4 a) und b) zeigen das gegenständliche Ziel-Annäherungsverfahren bei iterativer Durchführung des Adaptierungsschritts entlang des Wegs 11 zur Zielposition 3. In Fig. 4a wird stets die Ausgangsposition (Startposition 2 oder Referenzposition 34) anvisiert, in Fig. 4b wird auf die jeweils letzte Position anvisiert.

In Fig. 4a ist die Situation dargestellt, dass entlang des Wegs 11 stets zurück auf die Ausgangsposition des Wegs 11 referenziert wird. In Fig. 4a ist dies die Startposition Ps 2. Im Zielpositions-Bestimmungsschritts wird von der Startposition Ps 2 die erste Entfernung D₁ 6 und der erste Winkel α₁ 8 zum Ziel an der Zielposition P_{T} 3 ermittelt.

Der Träger des fernoptischen Gerätes bewegt sich anschließend auf einem Weg 11 in Richtung Zielposition 3. An einer ersten Zwischenposition P_{I1} 19, 12 wird ein bereits zuvor beschriebener Adaptierungsschritt durchgeführt und dabei die erste Differenzentfernung D_{I1} 13 und der erste Differenzwinkel an 14 ermittelt. Aus der im Zielpositions-Bestimmungsschritt ermittelten ersten Entfernung D₁ 6 und dem ermittelten ersten Winkel α₁ 8 werden die erste Zielentfernung D_{T1} 16 und der erste Zielwinkel α_{T1} 17 ermittelt und dem Träger des fernoptischen Geräts am Anzeigemittel dargestellt.

Daraufhin bewegt sich der Träger des fernoptischen Geräts am Weg 11 weiter zur zweiten Zwischenposition P_{I2} 20 und führt dort den Adaptierungsschritt erneut aus, und ermittelt eine zweite Differenzentfernung D_{I2} 21 und einen zweiten Differenzwinkel α_{I2} 22. Aus der ersten Entfernung D₁ 6 und dem ersten Winkel α₁ 8, sowie der zweiten Differenzentfernung D_{I2} 21 und dem zweiten Differenzwinkel α_{I2} 22 wird eine zweite Zielentfernung D_{T2} 23 und ein zweiter Zielwinkel α_{T2} 24 ermittelt.

Der Träger des fernoptischen Geräts bewegt sich am Weg 11 weiter zur dritten Zwischenposition 25 und führt dort den Adaptierungsschritt erneut aus. Auf eine detaillierte Beschreibung der einzelnen Vorgänge wird verzichtet, da diese den Schritten beim Adaptierungsschritt an der zweiten Zwischenposition 20 gleichen. Im Adaptierungsschritt wird eine dritte Differenzentfernung D_{I3} und ein dritter Differenzwinkel α_{I3} ermittelt und wie zuvor, eine dritte Zielentfernung D_{T3} und ein dritter Zielwinkel α_{T3} ermittelt.

Wird anstelle der Startposition 2 eine Referenzposition 34 als Basis für die Zielnavigation verwendet, wird im Adaptierungsschritt der beschriebene Fall II durchgeführt. Es wird die Referenzposition anvisiert und vom geodätischen Rechenmodul die Referenzentfernung bzw. der Referenzwinkel zur Ermittlung der Zielentfernung und des Zielwinkels herangezogen. Alle anderen beschriebenen Abläufe bleiben gleich.

Gemäß Fig. 4b wird im ersten Zielpositions-Bestimmungsschritts von einer Startposition 2 die erste Entfernung 6 und der erste Winkel 8 zum Ziel an der Zielposition 3 ermittelt. Der Träger des fernoptischen Gerätes bewegt sich anschließend auf einen Weg 11 und führt dort einen bereits zuvor beschriebenen Adaptierungsschritt durch. An einer ersten Zwischenposition 19, 12 wird die erste Differenzentfernung 13 und der erste Differenzwinkel 14 ermittelt, und aus der im Zielpositions-Bestimmungsschritt ermittelten ersten Entfernung 6 und dem ermittelten ersten Winkel 8 die erste Zielentfernung 16 und der erste Zielwinkel 17 ermittelt. Daraufhin bewegt sich der Träger des fernoptischen Geräts am Weg 11 weiter zur zweiten Zwischenposition 20 und führt dort den Adaptierungsschritt erneut aus. Als Startposition des Adaptierungsschritts wird nun jedoch die erste Zwischenposition 19 anvisiert und eine zweite Differenzentfernung 21 und ein zweiter Differenzwinkel 22 ermittelt. Aus der Zielentfernung 16 als erster Entfernung des Adaptierungsschritts und dem Zielwinkel 17 als ersten Winkel des Adaptierungsschritts und der zweiten Differenzentfernung 21 und dem zweiten Differenzwinkel 22 wird eine zweite Zielentfernung 23 und ein zweiter Zielwinkel 24 ermittelt.

Der Träger des fernoptischen Geräts bewegt sich am Weg 11 weiter zur dritten Zwischenposition 25 und führt dort mit der zweiten Zwischenposition 20 als Startposition des Adaptierungsschritts diesen Adaptierungsschritt erneut aus. Auf eine Beschreibung der einzelnen Vorgänge wird verzichtet, da diese den Schritten beim Adaptierungsschritt an der zweiten Zwischenposition 20 gleichen, wobei die Indizes auf die dritte Zwischenposition angepasst werden müssen.

Mit dem gegenständlichen Ziel-Annäherungsverfahren ist es nun möglich, nach einer erstmaligen Anvisierung des Ziels und Bestimmung einer Entfernung und eines Winkels zum Ziel durch iterative Ausführung des Adaptierungsschritts entlang eines Wegs das Ziel zu erreichen, selbst wenn der Weg deutlich von der geraden Verbindung abweicht.

In den Fig. 1 bis 4 wurde die Situation des gegenständlichen Ziel-Annäherungsverfahrens in der Ebene beschrieben, also wenn zwischen der Start- und Zielposition, und insbesondere am Weg dazwischen, nur geringe Höhenunterschiede auftreten. Insbesondere befinden sich Start und Ziel sowie der Weg dazwischen weitestgehend in einer horizontalen Ebene. Unter diesen Voraussetzungen reicht eine rein zweidimensionale Berücksichtigung der Entfernung und des Winkels, um die Höhenkomponenten der Entfernung vernachlässigen zu können.

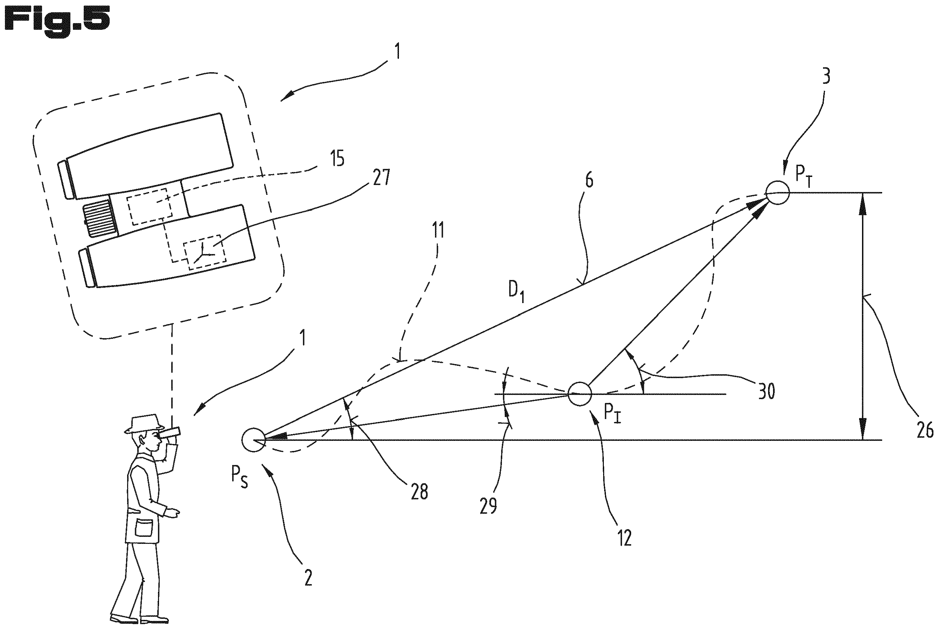

Real ist es jedoch wahrscheinlich, dass zwischen einer Startposition und der Zielposition ein Höhenunterschied besteht, und insbesondere am Weg dazwischen Höhenunterschiede (An-, Abstiege) zu überwinden sein werden. Fig. 5 zeigt nun die Situation bei der zwischen der Startposition 2 und der Zielposition 3 ein Höhenunterschied 26 besteht und wobei sich die Zwischenposition 12 höher als die Startposition 2 und niedriger als die Zielposition 3 befindet. Der Weg 11, den der Träger des fernoptischen Gerätes 1 zur Zielposition 3 zurücklegen wird, kann deutlich von einem geradlinigen Höhenanstieg abweichen. Insbesondere ist es möglich, dass zur Erreichung einer Zwischenposition 12 eine Position zu überwinden ist, die höher als die Zwischenposition liegt.

Nach einer vorteilhaften Weiterbildung weist das fernoptische Gerät 1 ferner eine mit dem Rechenmodul 15 verbundene Neigungsmessvorrichtung 27 auf, welche eine Neigung gegenüber der horizontalen als Höhenwinkel an das Rechenmodul 15 übermittelt. Dadurch wird das gegenständliche Ziel-Annäherungsverfahren dahingehend erweitert, dass im Zielpositions-Bestimmungsschritt an der Startposition 2, beim Anvisieren der Zielposition 3, zusätzlich ein erster Höhenwinkel 28 ermittelt wird. Der Träger des fernoptischen Gerätes wird sich dann entlang des Wegs 11 zur ersten Zwischenposition 12 bewegen und dort den Adaptierungsschritt durchführen. Dabei wird die Startposition 2 anvisiert und ein Differenzhöhenwinkel 33 ermittelt. Aus dem ermittelten ersten Höhenwinkel 28 und den Differenzhöhenwinkel 33 wird vom geodätischen Rechenmodul 15 der Zielhöhenwinkel 30 ermittelt.

Liegen mehrere Zwischenstationen am Weg zwischen der Start- und der Zielposition, ist die obige Beschreibung ähnlich wie zuvor für den ebenen Weg, auf einen Weg mit mehreren Zwischenstationen umzulegen.

Die Detaildarstellung in Fig. 5 zeigt lediglich die relevanten Komponenten des fernoptischen Geräts 1. Für weitere Details des fernoptischen Geräts 1 wird auf die Beschreibung zu den vorangegangenen Figuren verwiesen.

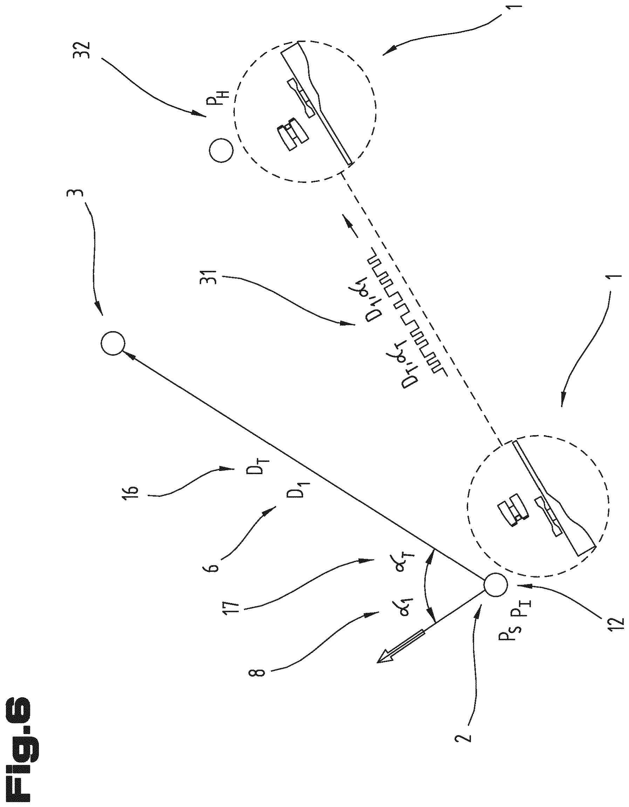

Bei der Bewegung im Gelände, insbesondere bei einer Jagd, kann es vorkommen, dass ein Träger des fernoptischen Geräts 1 an der Startposition 2 das Ziel an der Zielposition 3 zwar gut anvisieren kann, das Ziel jedoch aufgrund räumlicher Gegebenheiten nur schwierig erreichen kann. Nach einer weiteren möglichen Ausführung des gegenständlichen Ziel-Annäherungsverfahrens ist es daher möglich, dass mittels der Entfernungsmessvorrichtung des fernoptischen Geräts, die Richtungsinformation 31 das Ziel betreffend, an ein zweites fernoptisches Gerät 1 an einer Übergabeposition 32 übergeben wird, wie dies in Fig. 6 schematisch dargestellt ist. Bevorzugt ist die Entfernungsmessvorrichtung des fernoptischen Geräts als Laser-Entfernungsmessgerät ausgebildet, welches eine Folge von Laserpulsen aussendet und aus einer Laufzeitbestimmung die Entfernung zum Ziel ermittelt. Mit diesen Pulsen bzw. in Impulspausen kann vorgesehen sein, dass die Richtungsinformation gepackt übertragen wird. Somit braucht vom Träger des ersten fernoptischen Geräts das zweite fernoptische Gerät anvisiert werden und die Übertragung der Richtungsinformation ausgelöst werden.

Befindet sich der Träger des ersten fernoptischen Geräts an der Startposition 2 und hat noch keinen Adaptierungsschritt durchgeführt, wird als Richtungsinformation 31 die erste Entfernung 6 und der erste Winkel 8 als zweite Richtungsinformation 31 übertragen. Es ist jedoch auch möglich, dass sich der Träger des fernoptischen Geräts 1 bereits entlang des Weges bewegt hat und sich nun an einer Zwischenposition 12 befindet, von der aus der weitere Weg schwierig wird. Vom Träger des ersten fernoptischen Geräts wird also an der Zwischenposition 12 der Adaptierungsschritt durchgeführt und die Zielentfernung 16 und der Zielwinkel 17 als erste Richtungsinformation 31 an das zweite fernoptische Gerät übermittelt.

Da sich das zweite fernoptische Gerät an einer anderen Position befindet als für die Erstellung der Richtungsinformation als Ausgangspunkt diente, muss die Richtungsinformation zum Ziel an der Zielposition 3 erneut bestimmt werden. Ebenfalls werden bei der Übergabe auch die Differenzentfernung und der Differenzwinkel zwischen dem ersten und dem zweiten fernoptischen Gerät ermittelt.

Vom fernoptischen Gerät 1 an der Übergabeposition 32 wird daher der Adaptierungsschritt durchgeführt, in dem die Startposition 2 bzw. Zwischenposition 12 des übergebenden, fernoptischen Geräts 1 als Startposition des Adaptierungsschritts gesetzt wird. Es ist jedoch auch möglich, dass vom fernoptischen Gerät 1 an der Startposition 2 oder an der Zwischenposition 12 der Adaptierungsschritt durchgeführt wird, wobei als Startposition des Adaptierungsschritts die physische Startposition oder die physische Zwischenposition des fernoptischen Geräts festgelegt wird. Dieser Fall entspricht einer Vorwärtsberechnung der Zielentfernung bzw. des Zielwinkels, da vor der Übergabe der Richtungsinformation an das zweite fernoptische Gerät 1 an der Übergabeposition 32, die Zielentfernung und der Zielwinkel bereits ermittelt wurde.

Vorteilhaft an dieser Ausführung ist nun insbesondere, dass ohne zusätzliche Kommunikationsmittel und insbesondere unter Vermeidung eines Datenverlustes die Übermittlung einer Richtungsinformation möglich ist, sodass ein zweites fernoptisches Gerät an einer Übergabeposition nahtlos die Annäherung an das Ziel fortsetzen kann, wenn dies für das übergebende fernoptische Gerät nicht oder nur schwer möglich ist.

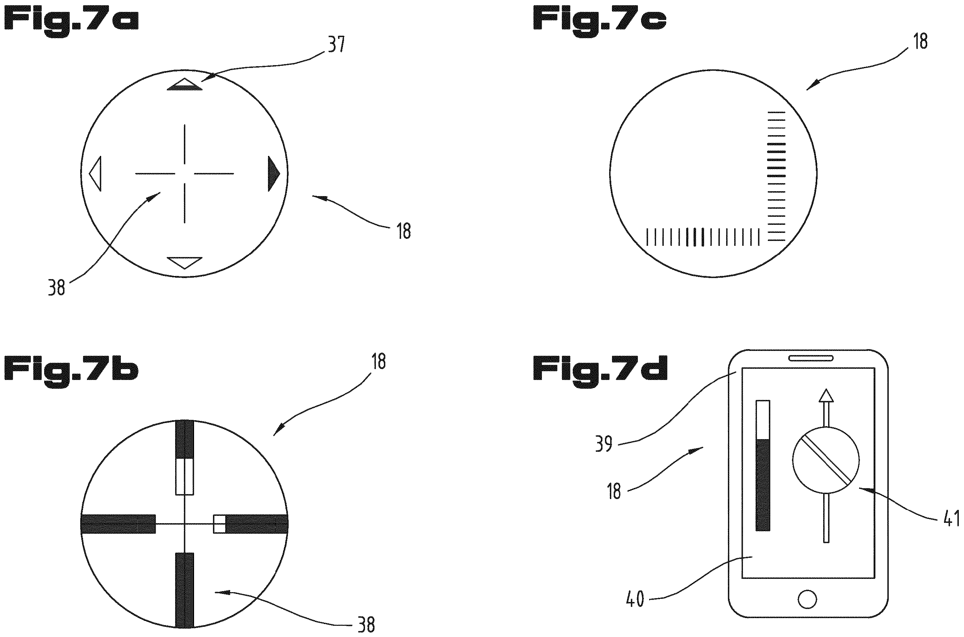

Fig. 7 a) bis d) zeigen beispielhaft mögliche Varianten, wie die ermittelte Zielentfernung und der ermittelte Zielwinkel auf einem Anzeigemittel dargestellt werden.

Die Figuren 7a bis 7c zeigen einen Blick durch das fernoptische Gerät, wobei in den Strahlengang die Information eingeblendet wird, bspw. über semitransparente Spiegel. Über die Möglichkeiten der Einblendung von Information in den Strahlengang einer Optik wird hierin nicht weiter eingegangen.

Figur 7a zeigt Richtungspfeile 37, welche eine horizontale und vertikale Richtung angeben können. Es kann vorgesehen sein, dass die Richtungspfeile durch eine Befüllung bzw. Teilbefüllung des Pfeilkörpers dem Benutzer die Richtung darstellen, in welche das fernoptische Gerät zu bewegen ist. Sind alle Pfeile gefüllt/leer, ist das Zentrum des Blickfelds auf das Ziel ausgerichtet. Die korrekte Ausrichtung könnte zusätzlich auch durch einen optischen Effekt dargestellt werden, bspw. in dem alle Richtungspfeile 37 kurz blinken. Alternativ könnte nur ein Pfeil vorgesehen sein, der entlang des Umfangs des Anzeigemittels 18 dargestellt wird, wobei seine Position die Bewegung zur Ausrichtung des fernoptischen Geräts angibt. Eine ähnliche Situation zeigt Fig. 7b, nur werden hier die Elemente des Absehens (speziell Absehen 8) zur Darstellung der Ausrichtinformation verwendet. Ein befüllter/leerer Balken des Absehens 38 gibt wie zuvor die Richtung an, in welche das fernoptische Gerät bewegt werden muss, um auf das Ziel ausgerichtet zu sein. Zur Darstellung der Entfernung könnte bspw. der Abstand zwischen den Enden des Absehens 38 verwendet werden. Oder es zusätzlich wird ein längenveränderlicher Balken oder ähnliches eingeblendet.

Fig. 7c verwendet Skalen, um die Ausrichtinformation darzustellen. Wenn nur das mittlere Skalenteilungselement verstärkt angezeigt wird, ist das fernoptische Gerät auf das Ziel ausgerichtet. Beispielsweise könnte ein Skalenelement blinken, um die Entfernung darzustellen, oder es wird ein Teilbereich der Skala parallel zu der Darstellung der Ausrichtinformation, als Abstandsbalken verwendet

Fig. 7d zeigt ein Datenendgerät 39, welches das Anzeigemittel 18 bildet, wobei das Datenendgerät 39 bspw. ein Smartphone sein kann. Auf einer Anzeige 40 wird ein Richtungspfeil 41 und eine Entfernungsangabe 42 dargestellt sein. Das Datenendgerät 39 weist bevorzugt auch ein Positionsbestimmungsmodul auf, sodass die eigene Ausrichtung bestimmt werden kann und eine Abweichung vom ermittelten Zielwinkel dargestellt werden kann. Bei korrekter Ausrichtung weist das Datenendgerät genau in Richtung der Zielposition.

Die in den Fig. 7 dargestellten Anzeigemittel 18 sind nicht abschließende Beispiele für mögliche Varianten, wie der Zielwinkel und die Zielentfernung dem Benutzer des fernoptischen Geräts dargestellt werden können. Nicht dargestellte, weitere mögliche Darstellungsvarianten sind explizit mitumfasst. Zwischen dem Datenendgerät 39 und dem geodätischen Rechenmodul wird eine Kommunikationsverbindung bestehen, bevorzugt eine drahtlose Verbindung wie Bluetooth, ZigBee oder Ähnliches.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 6 ist eine weitere und gegebenenfalls für sich eigenständige Ausführungsform des Ziel-Annäherungsverfahrens gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fernoptisches Gerät | 30 | Zielhöhenwinkel |
| 2 | Startposition | 31 | Erste/zweite Richtungsinformation |
| 3 | Zielposition | 32 | Übergabeposition |
| 4 | Beobachtungsoptik | 33 | Differenzhöhenwinkel |
| 5 | Entfernungsmessvorrichtung | 34 | Referenzposition |
| 6 | erste Entfernung | 35 | Referenzentfernung |
| 7 | Ausrichtungsermittlungsvorrichtung | 36 | Referenzwinkel |
| | | 37 | Richtungspfeil |
| 8 | erster Winkel | 38 | Absehen |
| 9 | Absolutrichtung | 39 | Datenendgerät |
| 10 | Bezugsrichtung | 40 | Anzeige |
| 11 | Weg | 41 | Richtungspfeil |
| 12 | Zwischenposition | 42 | Entfernungsangabe |
| 13 | Differenzentfernung | | |
| 14 | Differenzwinkel | | |
| 15 | Rechenmodul | | |
| 16 | Zielentfernung | | |
| 17 | Zielwinkel | | |
| 18 | Anzeigemittel | | |
| 19 | erste Zwischenposition | | |
| 20 | zweite Zwischenposition | | |
| 21 | zweite Differenzentfernung | | |
| 22 | zweiter Differenzwinkel | | |
| 23 | zweite Zielentfernung | | |
| 24 | zweiter Zielwinkel | | |
| 25 | dritte Zwischenposition | | |
| 26 | Höhenunterschied | | |
| 27 | Neigungsmessvorrichtung | | |
| 28 | Höhenwinkel | | |
| 29 | | | |

## Patentansprüche

1. Ziel-Annäherungsverfahren mit einem fernoptischen Gerät (1),
- welches fernoptische Gerät (1) eine Beobachtungsoptik (4), eine Entfernungsmessvorrichtung (5) und eine Ausrichtungsermittlungsvorrichtung (7) aufweist,
- wobei sich ein Träger des fernoptischen Geräts (1) auf einem Weg (11), der sich von einer Startposition (2) zu einer Zielposition (3) erstreckt, zu einer Zwischenposition (12) bewegt,
- wobei ein Adaptierungsschritt umfasst ist, **dadurch gekennzeichnet, dass** im Adaptierungsschritt an der Zwischenposition (12) mit der Beobachtungsoptik (4) des fernoptischen Geräts (1) eine Referenzposition (34) anvisiert wird, wobei eine Referenzentfernung (35) und ein Referenzwinkel (36) der Referenzposition (34) relativ zum Ziel an einer Zielposition (3) in einem geodätischen Rechenmodul (15) hinterlegt sind und
- mittels der Ausrichtungsermittlungsvorrichtung (7) ein Differenzwinkel (14) zwischen einer Absolutrichtung (9) und einer Bezugsrichtung (10) des fernoptischen Geräts (1) ermittelt wird, und
- mittels der Entfernungsmessvorrichtung (5) eine Differenzentfernung (13) von der Zwischenposition (12) zur Referenzposition (34) ermittelt wird und
- von einem geodätischen Rechenmodul (15) aus der Referenzentfernung (35) und der Differenzentfernung (13), sowie aus dem Referenzwinkel (36) und dem Differenzwinkel (14), eine Zielentfernung (16) und ein Zielwinkel (17) der Zwischenposition (12) relativ zu der Zielposition (3) ermittelt werden.

2. Verfahren nach Anspruch 1, **dadurch gekennzeichnet, dass** das Verfahren einen Referenzierungsschritt aufweist, wobei im Referenzierungsschritt
- von einer ersten Position aus eine zweite Position mittels der Beobachtungsoptik (4) anvisiert wird, wobei von der ersten Position die Entfernung und der Winkel zum Ziel an der Zielposition (3) bekannt sind,
- mittels der Entfernungsmessvorrichtung (5) eine Differenzentfernung (6) zwischen der ersten und der zweiten Position und
- mittels der Ausrichtungsermittlungsvorrichtung (7) ein erster Winkel (8) zwischen einer Absolutrichtung (9) und einer Bezugsrichtung (10) des fernoptischen Geräts (1) ermittelt werden,
- vom geodätischen Rechenmodul (15) aus der Differenzentfernung (6) und dem ersten Winkel (8) sowie aus der bekannten Entfernung und Winkel zum Ziel an der Zielposition (3) von der ersten Position aus, die Entfernung und der Winkel zum Ziel an der Zielposition (3) der zweiten Position ermittelt werden und
- diese ermittelte Entfernung und dieser Winkel als Referenzentfernung (35) und Referenzwinkel (36) der vorher unbestimmten, zweiten Position gesetzt werden und diese zweite Position somit zu einer Referenzposition (34) wird,
- wobei zumindest eine Startposition (2) durch Messung zur Zielposition (3) als Referenzposition (34) nach diesen Schritten bestimmt wird.

3. Verfahren nach Anspruch 1, **dadurch gekennzeichnet, dass** das fernoptische Gerät (1) ferner eine Neigungsmessvorrichtung (27) aufweist, wobei im Adaptierungsschritt, beim Anvisieren der Referenzposition (34) von der Zwischenposition (12) ausgehend, ein Differenzhöhenwinkel (33) von der Zwischenposition (12) zur Referenzposition (34) ermittelt wird, wobei ein Referenzhöhenwinkel der Referenzposition (34) relativ zur Zielposition (3) im geodätischen Rechenmodul (15) hinterlegt ist, und vom geodätischen Rechenmodul (15) aus dem Referenzhöhenwinkel und dem Differenzhöhenwinkel (33) ein Zielhöhenwinkel (30) der Zwischenposition (12) relativ zu der Zielposition (3) ermittelt wird, und dieser bei der Berechnung der Zielentfernung (16) und des Zielwinkels (17) mit berücksichtig wird.

4. Verfahren nach Anspruch 2, **dadurch gekennzeichnet, dass** das fernoptische Gerät (1) ferner eine Neigungsmessvorrichtung (27) aufweist, wobei beim Anvisieren der zweiten Position im Referenzierungsschritt, ein Differenzhöhenwinkel (33) ermittelt wird, und vom geodätischen Rechenmodul (15) aus dem Differenzhöhenwinkel (33) und einem bekannten Höhenwinkel der ersten Position zu der Zielposition (3) ein Höhenwinkel der zweiten Position zu der Zielposition (3) ermittelt wird und dieser Höhenwinkel der zweiten Position als ein Referenzzielhöhenwinkel (30) bestimmt wird.

5. Verfahren nach einem der Ansprüche 1 oder 3, **dadurch gekennzeichnet, dass** die ermittelte Zielentfernung (16), der ermittelte Zielwinkel (17) und/oder der ermittelte Zielhöhenwinkel (30), auf einem Anzeigemittel (18) dargestellt werden, wobei zur Darstellung sowohl Ziffern als auch grafische Indikatoren zur Veranschaulichung der Zahlenwerte dienen können.

6. Verfahren nach einem der Ansprüche 2 bis 5, **dadurch gekennzeichnet, dass** der Adaptierungsschritt an einer von der vorherigen Zwischenposition räumlich distanzierten weiteren Zwischenposition erneut durchgeführt wird, in dem die Zwischenposition (12) gleich der Startposition (2), die ermittelte Zielentfernung (16) zur ersten Entfernung und der Zielwinkel (17) zum ersten Winkel (8) festgelegt wird, und dass gegebenenfalls der Differenzhöhenwinkel (33) zum ersten Höhenwinkel (28) festgelegt wird.

7. Verfahren nach einem der Ansprüche 1 bis 6, **dadurch gekennzeichnet, dass** der Adaptierungsschritt an einer von der vorherigen Zwischenposition räumlich distanzierten weiteren Zwischenposition erneut durchgeführt wird.

8. Verfahren nach einem der Ansprüche 1 bis 7, **dadurch gekennzeichnet, dass** die Ausrichtungsermittlungsvorrichtung (7) durch einen Kompass gebildet ist, und als Absolutrichtung (9) die Nord-Richtung festgelegt wird.

9. Verfahren nach einem der Ansprüche 1 bis 8, **dadurch gekennzeichnet, dass** von der Ausrichtungsermittlungsvorrichtung (7) die Absolutrichtung (9) kontinuierlich bzw. zyklisch ermittelt wird, und am Anzeigemittel (18) dargestellt wird.

10. Verfahren nach einem der Ansprüche 1 bis 9, wobei die Entfernungsmessvorrichtung (5) ein Leuchtmittel zur gerichteten Abgabe von gepulstem Licht aufweist, insbesondere einen Laser oder eine LED, **dadurch gekennzeichnet, dass** mittels der Entfernungsmessvorrichtung (5)
(I) ausgehend vom fernoptischen Gerät (1) an der Zwischenposition (12), als erste Richtungsinformation (31) die Zielentfernung (16) und der Zielwinkel (17), und gegebenenfalls der Zielhöhenwinkel (30), oder
(II) ausgehend vom fernoptischen Gerät (1) an der Startposition (2), als zweite Richtungsinformation (31) die erste Entfernung (6) und der erste Winkel (8), und gegebenenfalls der erste Höhenwinkel (28), an eine Gegenstation übertragen werden, wobei sich die Gegenstation an einer, von der Startposition (2) oder der Zwischenposition (12) räumlich entfernten Übergabeposition (32) befindet.

11. Verfahren nach Anspruch 10, **dadurch gekennzeichnet, dass** von der Gegenstelle an der Übergabeposition (32)
(I) für die übermittelte erste Richtungsinformation (31) die Zielentfernung (16) als Referenzentfernung (35) und der Zielwinkel (17) als Referenzwinkel (36) festgelegt wird, und gegebenenfalls ferner der Zielhöhenwinkel (30) als Referenzhöhenwinkel festgelegt wird, und der Adaptierungsschritt erneut durchgeführt wird oder dass
(II) für die übermittelte zweite Richtungsinformation (31) der Adaptierungsschritt durchgeführt oder erneut durchgeführt wird.

12. Verfahren nach einem der Ansprüche 5 bis 11, **dadurch gekennzeichnet, dass** das Anzeigemittel (18) durch ein mobiles Datenendgerät gebildet ist und wobei zwischen dem fernoptischen Gerät (1) und dem mobilen Datenendgerät eine drahtlose HochfrequenzKommunikationsverbindung besteht, über welche die ermittelte Zielentfernung (16) und der ermittelte Zielwinkel (17), und gegebenenfalls der Zielhöhenwinkel (30), übertragen werden.

13. Verfahren nach Anspruch 12, wobei das mobile Datenendgerät ebenfalls eine Ausrichtungsermittlungsvorrichtung (7) aufweist, insbesondere einen elektronischen Kompass, **dadurch gekennzeichnet, dass** mittels der Ausrichtungsermittlungsvorrichtung (7) des Datenendgeräts vom Datenendgerät ein Ausricht-Winkel zwischen der Ausrichtung des Datenendgeräts und der Absolutrichtung (9) ermittelt wird und der übermittelte Zielwinkel (17) auf den Ausricht-Winkel transformiert wird und der dabei ermittelte Differenzwinkel (14) am Anzeigemittel (18) angezeigt wird.

14. Verfahren nach einem der Ansprüche 12 oder 13, **dadurch gekennzeichnet, dass** das Datenendgerät einen Beschleunigungssensor aufweist, welcher eine Bewegung des Datenendgeräts erfasst und als Bewegungsvektor dem geodätischen Rechenmodul (15) übergibt, welches kontinuierlich oder zyklisch aus der Referenzentfernung (35) und dem Referenzwinkel (36), sowie der Differenzentfernung (13) und dem Differenzwinkel (14), und gegebenenfalls dem Differenzhöhenwinkel (33) und dem ersten Höhenwinkel (28), die Zielentfernung (16) und den Zielwinkel (17) und gegebenenfalls den Zielhöhenwinkel (30) aktualisiert.

15. Verfahren nach einem der Ansprüche 5 bis 14, **dadurch gekennzeichnet, dass** das Anzeigemittel (18) derart an der Beobachtungsoptik (4) angeordnet ist, dass die Darstellung der Zielentfernung (16) und des Zielwinkels (17) in den Strahlengang der Beobachtungsoptik (4) eingeblendet wird.

16. Verfahren nach einem der Ansprüche 1 bis 15, **dadurch gekennzeichnet, dass** die Zielentfernung (16) und der Zielwinkel (17) und gegebenenfalls der Zielhöhenwinkel (30) als eines aus der Gruppe Richtungspfeil, Skalenbereich, Ausrichtvektor, Balkendarstellung und alphanumerische Darstellung am Anzeigemittel (18) angezeigt werden.

## Claims

1. A target approach method with a long-range optical device (1),
- said long-range optical device (1) comprising observation optics (4), a rangefinder device (5) and an orientation determination device (7),
- wherein a user of the long-range optical device (1), on a route (11) extending from a starting position (2) to a target position (3), moves to an intermediate position (12),
- wherein an adaption step is comprised, **characterized in that** in the adaption step, at an intermediate position (12), a reference position (34) is aimed at by means of the observation optics (4) of the long-range optical device (1), wherein a reference distance (35) and a reference angle (36) of the reference position (34) relative to the target at a target position (3) are stored in a geodetic calculation module (15) and
- a difference angle (14) between an absolute direction (9) and a reference direction (10) of the long-range optical device (1) is determined by means of the orientation determination device (7), and
- a difference distance (13) from the intermediate position (12) to the reference position (34) is determined by means of the rangefinder device (5), and
- a target distance (16) and a target angle (17) of the intermediate position (12) relative to the target position (3) are determined by a geodetic calculation module (15) from the reference distance (35) and the difference distance (13), as well as from the reference angle (36) and the difference angle (14).

2. The method according to claim 1, **characterized in that** the method comprises a referencing step, wherein in the referencing step
- from a first position, a second position is aimed at by means of the observation optics (4), wherein the distance and the angle to the target at the target position (3) from the first position are known,
- a difference distance (6) between the first and the second position is determined by means of the rangefinder device (5), and
- a first angle (8) between an absolute direction (9) and a reference direction (10) of the long-range optical device (1) is determined by means of the orientation determination device (7),
- the distance and the angle to the target at the target position (3) of the second position are determined by the geodetic calculation module (15) from the difference distance (6) and the first angle (8) as well as from the known distance and angle to the target at the target position (3) from the first position, and
- this determined distance and this angle are set as the reference distance (35) and reference angle (36) of the previously undetermined, second position and thus this second position becomes a reference position (34),
- wherein by measuring to the target position (3), at least one starting position (2) is determined as a reference position (34) according to these steps.

3. The method according to claim 1, **characterized in that** the long-range optical device (1) moreover comprises an inclinometer (27), wherein in the adaption step, a difference elevation angle (33) from the intermediate position (12) to the reference position (34) is determined when aiming at the reference position (34) starting out from the intermediate position (12), wherein a reference elevation angle of the reference position (34) relative to the target position (3) is stored in the geodetic calculation module (15), and the geodetic calculation module (15) determines a target elevation angle (30) of the intermediate position (12) relative to the target position (3) from the reference elevation angle and the difference elevation angle (33), and this is taken into account when the target distance (16) and the target angle (17) are calculated.

4. The method according to claim 2, **characterized in that** the long-range optical device (1) further comprises an inclinometer (27), wherein when the second position is aimed at in the referencing step, a difference elevation angle (33) is determined, and an elevation angle of the second position to the target position (3) is determined by the geodetic calculation module (15) from the difference elevation angle (33) and a known elevation angle of the first position to the target position (3) and this elevation angle of the second position is determined as a reference elevation angle (30).

5. The method according to one of claims 1 or 3, **characterized in that** the determined target distance (16), the determined target angle (17) and/or the determined target elevation angle (30) are displayed on a display means (18), wherein both numerals and graphical indicators can serve to illustrate the numerical values.

6. The method according to one of claims 2 to 5, **characterized in that** the adaption step is carried out again at a further intermediate position that is spatially distant from the previous intermediate position, wherein the intermediate position (12) is set to be equal to the starting position (2), the determined target distance (16) is set to the first distance, and the target angle (17) is set to the first angle (8), and that, optionally, the difference elevation angle (33) is set to the first elevation angle (28).

7. The method according to one of claims 1 to 6, **characterized in that** the adaption step is carried out again at a further intermediate position that is spatially distant from the previous intermediate position.

8. The method according to one of claims 1 to 7, **characterized in that** the orientation determination device (7) is formed by a compass, and the north direction is set as the absolute direction (9).

9. The method according to one of claims 1 to 8, **characterized in that** the absolute direction (9) is determined continuously and/or cyclically by the orientation determination device (7), and displayed on the display means (18).

10. The method according to one of claims 1 to 9, wherein the rangefinder device (5) comprises a light source for the directed delivery of pulsed light, in particular a laser or an LED, **characterized in that** by means of the rangefinder device (5)
(I) starting out from the long-range optical device (1) at the intermediate position (12), the target distance (16) and the target angle (17), and optionally the target elevation angle (30), are given as a first direction information (31), or
(II) starting out from the long-range optical device (1) at the starting position (2), the first distance (6) and the first angle (8), and optionally the first elevation angle (28), are transmitted to a remote station as a second direction information (31), wherein the remote station is located at a transfer position (32) that is spatially distant from the starting position (2) or the intermediate position (12).

11. The method according to claim 10, **characterized in that** the remote station at the transfer position (32)
(I) determines the target distance (16) as the reference distance (35) and the target angle (17) as the reference angle (36) for the transmitted first direction information (31), and optionally further determines the target elevation angle (30) as the reference elevation angle, and the adaptation step is carried out again, or that
(II) the adaptation step is carried out or carried out again for the transmitted second direction information (31).

12. The method according to one of claims 5 to 11, **characterized in that** the display means (18) is formed by a mobile data terminal, and wherein between the long-range optical device (1) and the mobile data terminal there is a wireless high-frequency communication connection, via which the determined target distance (16) and the determined target angle (17), and optionally the target elevation angle (30), are transmitted.

13. The method according to claim 12, wherein the mobile data terminal also comprises an orientation determination device (7), in particular an electronic compass, **characterized in that** an orientation angle between the orientation of the data terminal and the absolute direction (9) is determined by the data terminal by means of the orientation determination device (7) of the data terminal, and the transmitted target angle (17) is transformed to the orientation angle and the thus determined difference angle (14) is displayed on the display means (18).

14. The method according to one of claims 12 or 13, **characterized in that** the data terminal comprises an acceleration sensor which detects a movement of the data terminal and transfers it as a movement vector to the geodetic calculation module (15), which continuously or cyclically updates the target distance (16) and the target angle (17) and optionally the target elevation angle (30) from the reference distance (35) and the reference angle (36), as well as the difference distance (13) and the difference angle (14), and optionally the difference elevation angle (33) and the first elevation angle (28).

15. The method according to one of claims 5 to 14, **characterized in that** the display means (18) is arranged on the observation optics (4) such that the representation of the target distance (16) and the target angle (17) is superimposed in the beam path of the observation optics (4).

16. The method according to one of claims 1 to 15, **characterized in that** the target distance (16) and the target angle (17) and optionally the target elevation angle (30) are displayed on the display means (18) as one of a group comprising directional arrow, scale range, orientation vector, bar chart, and alphanumeric representation.

## Revendications

1. Procédé d'approche d'une cible avec un appareil de téléoptique (1),
- lequel appareil de téléoptique (1) comporte une optique d'observation (4), un dispositif de mesure de distance (5) et un dispositif de détermination d'orientation (7),
- un support de l'appareil de téléoptique (1) se déplaçant vers une position intermédiaire (12) sur un trajet (11) qui s'étend d'une position de départ (2) vers une position de la cible (3),
- une étape d'adaptation étant comprise, **caractérisé en ce que**, dans l'étape d'adaptation, une position de référence (34) est visée avec l'optique d'observation (4) de l'appareil de téléoptique (1) au niveau de la position intermédiaire (12), une distance de référence (35) et un angle de référence (36) de la position de référence (34) relativement à la cible au niveau d'une position de la cible (3) étant enregistrés dans un module de calcul (15) géodésique et
- un angle différentiel (14) entre une direction absolue (9) et une direction de référence (10) de l'appareil de téléoptique (1) est déterminé au moyen du dispositif de détermination d'orientation (7), et
- une distance différentielle (13) de la position intermédiaire (12) vers la position de référence (34) est déterminée au moyen du dispositif de mesure de distance (5), et
- une distance de la cible (16) et un angle de la cible (17) de la position intermédiaire (12) relativement à la position de la cible (3) sont déterminés par un module de calcul (15) géodésique à partir de la distance de référence (35) et de la distance différentielle (13), ainsi qu'à partir de l'angle de référence (36) et de l'angle différentiel (14).

2. Procédé selon la revendication 1, **caractérisé en ce que** le procédé comporte une étape de référencement, dans lequel, dans l'étape de référencement,
- une deuxième position est visée au moyen de l'optique d'observation (4) à partir d'une première position, la distance et l'angle par rapport à la cible au niveau de la position de la cible (3) étant connus de par la première position,
- une distance différentielle (6) entre la première et la deuxième position est déterminée au moyen du dispositif de mesure de distance (5), et
- un premier angle (8) entre une direction absolue (9) et une direction de référence (10) de l'appareil de téléoptique (1) est déterminé au moyen du dispositif de détermination d'orientation (7),
- la distance et l'angle par rapport à la cible au niveau de la position de la cible (3) de la deuxième position sont déterminés par le module de calcul (15) géodésique à partir de la distance différentielle (6) et du premier angle (8) ainsi qu'à partir de la distance connue et de l'angle par rapport à la cible au niveau de la position de la cible (3) à partir de la première position, et
- cette distance déterminée et cet angle sont fixés en tant que distance de référence (35) et angle de référence (36) de la deuxième position auparavant indéterminée, et cette deuxième position devient ainsi une position de référence (34),
- au moins une position de départ (2) est définie après ces étapes par la mesure par rapport à la position de la cible (3) en tant que position de référence (34).

3. Procédé selon la revendication 1, **caractérisé en ce que** l'appareil de téléoptique (1) comporte en outre un dispositif de mesure d'inclinaison (27), un angle d'élévation différentiel (33) de la position intermédiaire (12) par rapport la position de référence (34) étant déterminé dans l'étape d'adaptation, lors de la visée de la position de référence (34) à partir de la position intermédiaire (12), un angle d'élévation de référence de la position de référence (34) relativement à la position de la cible (3) étant enregistré dans le module de calcul (15) géodésique, et un angle d'élévation de la cible (30) de la position intermédiaire (12) relativement à la position de la cible (3) étant déterminé par le module de calcul (15) géodésique à partir de l'angle d'élévation de référence et de l'angle d'élévation différentiel (33), et cet angle d'élévation de la cible (30) étant également pris en considération lors du calcul de la distance de la cible (16) et de l'angle de la cible (17).

4. Procédé selon la revendication 2, **caractérisé en ce que** l'appareil de téléoptique (1) comporte également un dispositif de mesure d'inclinaison (27), dans lequel un angle d'élévation différentiel (33) est déterminé lors de la visée de la deuxième position dans l'étape de référencement, et un angle d'élévation de la deuxième position par rapport à la position de la cible (3) est déterminé par le module de calcul (15) géodésique à partir de l'angle d'élévation différentiel (33) et d'un angle d'élévation connu de la première position par rapport à la position de la cible (3), et cet angle d'élévation de la deuxième position est défini en tant qu'angle d'élévation de la cible de référence (30).

5. Procédé selon l'une des revendications 1 ou 3, **caractérisé en ce que** la distance de la cible (16) déterminée, l'angle de la cible (17) déterminé et/ou l'angle d'élévation de la cible (30) déterminé sont représentés sur un moyen d'affichage (18), des chiffres aussi bien que des indicateurs graphiques pouvant, pour la représentation, servir à illustrer les valeurs chiffrées.

6. Procédé selon l'une des revendications 2 à 5, **caractérisé en ce que** l'étape d'adaptation est effectuée de nouveau au niveau d'une autre position intermédiaire spatialement distante de la position intermédiaire précédente, dans laquelle étape la position intermédiaire (12) est fixée comme étant égale à la position de départ (2), la distance de la cible (16) déterminée est fixée par rapport à la première distance, et l'angle de la cible (17) est fixé par rapport au premier angle (8), et **en ce que**, éventuellement, l'angle d'élévation différentiel (33) est fixé par rapport au premier angle d'élévation (28).

7. Procédé selon l'une des revendications 1 à 6, **caractérisé en ce que** l'étape d'adaptation est effectuée de nouveau au niveau d'une autre position intermédiaire spatialement distante de la position intermédiaire précédente.

8. Procédé selon l'une des revendications 1 à 7, **caractérisé en ce que** le dispositif de détermination d'orientation (7) est formé par un compas, et **en ce que** la direction nord est fixée en tant que direction absolue (9).

9. Procédé selon l'une des revendications 1 à 8, **caractérisé en ce que** la direction absolue (9) est déterminée de façon cyclique ou respectivement continue par le dispositif de détermination d'orientation (7) et est représentée sur le moyen d'affichage (18).

10. Procédé selon l'une des revendications 1 à 9, le dispositif de mesure de distance (5) comportant un moyen d'éclairage destiné à la distribution dirigée de lumière puisée, en particulier un laser ou une LED, **caractérisé en ce que**, au moyen du dispositif de mesure de distance (5),
(I) en partant de l'appareil de téléoptique (1), au niveau de la position intermédiaire (12), en tant que première information de direction (31), la distance de la cible (16) et l'angle de la cible (17), et éventuellement l'angle d'élévation de la cible (30), ou
(II) en partant de l'appareil de téléoptique (1), au niveau de la position de départ (2), en tant que deuxième information de direction (31), la première distance (6) et le premier angle (8), et éventuellement le premier angle d'élévation (28), sont transmis à une station distante, la station distante étant située au niveau d'une position de transfert (32) spatialement éloignée de la position de départ (2) ou de la position intermédiaire (12).

11. Procédé selon la revendication 10, **caractérisé en ce que**, de l'emplacement distant au niveau de la position de transfert (32)
(I) pour la première information de direction (31) transmise, la distance de la cible (16) est fixée en tant que distance de référence (35), et l'angle de la cible (17) est fixé en tant qu'angle de référence (36), et éventuellement en outre l'angle d'élévation de la cible (30) est fixé en tant qu'angle d'élévation de référence, et l'étape d'adaptation est de nouveau effectuée, ou **en ce que**
(II) l'étape d'adaptation est effectuée ou est de nouveau effectuée pour la deuxième information de direction (31) transmise.

12. Procédé selon l'une des revendications 5 à 11, **caractérisé en ce que** le moyen d'affichage (18) est formé par un terminal de données mobile, et une liaison de communication haute fréquence sans fil étant présente entre l'appareil de téléoptique (1) et le terminal de données mobile, liaison par le biais de laquelle la distance de la cible (16) déterminée et l'angle de la cible (17) déterminé, et éventuellement l'angle d'élévation de la cible (30), sont transmis.

13. Procédé selon la revendication 12, le terminal de données mobile comportant également un dispositif de détermination d'orientation (7), en particulier un compas électronique, **caractérisé en ce qu'**un angle d'orientation entre l'orientation du terminal de données et la direction absolue (9) est déterminé par le terminal de données au moyen du dispositif de détermination d'orientation (7) du terminal de données, et l'angle de la cible (17) transmis est transformé en angle d'orientation, et l'angle différentiel (14) déterminé à cette occasion est affiché sur le moyen d'affichage (18).

14. Procédé selon l'une des revendications 12 ou 13, **caractérisé en ce que** le terminal de données comporte un capteur d'accélération qui détecte un mouvement du terminal de données et le transmet en tant que vecteur de mouvement au module de calcul (15) géodésique qui, de façon continue ou cyclique, à partir de la distance de référence (35) et de l'angle de référence (36), ainsi qu'à partir de la distance différentielle (13) et de l'angle différentiel (14), et éventuellement à partir de l'angle d'élévation différentiel (33) et du premier angle d'élévation (28), actualise la distance de la cible (16) et l'angle de la cible (17), et éventuellement l'angle d'élévation de la cible (30).

15. Procédé selon l'une des revendications 5 à 14, **caractérisé en ce que** le moyen d'affichage (18) est disposé sur l'optique d'observation (4) de telle sorte que la représentation de la distance de la cible (16) et de l'angle de la cible (17) vient se superposer sur le trajet du faisceau de l'optique d'observation (4).

16. Procédé selon l'une des revendications 1 à 15, **caractérisé en ce que** la distance de la cible (16) et l'angle de la cible (17), et éventuellement l'angle d'élévation de la cible (30), sont affichés sur le moyen d'affichage (18) sous une forme parmi le groupe comprenant une flèche de direction, une échelle graduée, un vecteur d'orientation, un bargraphe et une représentation alphanumérique.
